# EUROPEAN PATENT SPECIFICATION

(11) **EP 4 619 467 B1**
(45) Date of publication and mention of the grant of the patent: **18.11.2026**
(21) Application number: 23822210.3
(22) Date of filing: 14.11.2023
(51) Int. Cl.: C08K 3/22, C08L 27/06

(54) **PVC COMPOSITIONS CONTAINING CO-PRECIPITATED RARE EARTH ADDITIVE**
PVC-ZUSAMMENSETZUNGEN MIT GEMEINSAM AUSGEFÄLLTEM SELTENERDADDITIV
COMPOSITIONS DE PVC CONTENANT UN ADDITIF DE TERRES RARES COPRÉCIPITÉ

(30) Priority: 14.11.2022 US 202263383661 P
(43) Date of publication of application: 24.09.2025
(73) Proprietor: Neo Chemicals & Oxides, LLC, Greenwood Village, CO 80111 (US)
(72) Inventor: HANELINE, Mason, Reames, Greenwood Village, CO 80111 (US); WILLIAMS, Steven, Paul, 40231 Kesk 2, Sillamae (EE); KISZKA, Mariusz, 40231 Kesk 2, Sillamae (EE); CARDELLI, Camillo, 51100 Pistoia (IT); HAVERIKU, Sara, 51100 Pistoia (IT); BADALASSI, Marco, 51100 Pistoia (IT)
(74) Representative: Haseltine Lake Kempner LLP
(86) International application number: PCT/US2023/079666
(87) International publication number: WO 2024/107743

(56) References cited:
- WO-A1-2023/245209
- CN-A- 104 497 438
- US-A1- 2015 353 711
- DATABASE WPI Week 201301, Derwent World Patents Index; AN 2012-C54278, XP002810958
- DATABASE WPI Week 201753, Derwent World Patents Index; AN 2017-49364M, XP002810961
- DATABASE WPI Week 200138, Derwent World Patents Index; AN 2001-356787, XP002810962

## Description

### Related Application

This application claims priority to and benefit of U.S. Provisional Application No. 63/383,661 filed November 14, 2022.

### Field of the Invention

The invention relates to polyvinyl chloride (PVC) compositions containing PVC resin, an inorganic flame retardant, and a coprecipitated rare earth additive, wherein the PVC compositions have a UL94 classification with a sample thickness of about 0.8 mm of V-2 or higher/better. The co-precipitated rare earth additive improves performance of the inorganic flame retardant additive and/or the flame retardant properties and thermal stability of the PVC formulation.

### Introduction

Polyvinyl chloride (PVC) resin is a polymer made from vinyl chloride monomer. This resin is mixed with other components to make a PVC composition or formulation which is often referred to simply as PVC. These PVC compositions require specific properties such as flame retardancy, color, thermal stability, malleability and moldability, to name a few. The other components or additives in the composition can impart the desired properties and these components/additives can be categorized as plasticizers, stabilizers, lubricants, fillers, and other functional additives. The amount of each of these additional components/additives also can change the desired properties of the PVC composition.

PVC compositions and products made from these PVC compositions generate hydrogen chloride gas during high shear processing or as a direct result of a combustion event, which can corrode external appliances and auto-initiates further decomposition of the PVC. Antimony trioxide (ATO), magnesium dihydroxide (MDH), and aluminum trihydrate (also frequently called alumina trihydrate (ATH)) have been used as flame retardants in PVC compositions. However, ATO is considered highly toxic and produces a large degree of smoke during a combustion event. The utility of ATH and MDH can be limited by their compatibility with particular PVC compositions, and ATH and MDH can have relatively limited loading capacity before negatively affecting physical and aesthetic characteristics of the PVC compositions and end-use products. Reducing or eliminating the content of these flame retardants in favor of "green" additives would be a significant advantage and remains a challenge.

CN102351903A discloses a phosphate rare earth metal salt which can be used in a resin including polyvinyl chloride in combination with a flame retardant chosen from antimony trioxide, zinc borate and melamine polyphosphate to achieve a UL94 (0.8mm) rating of V-0.

CN106916396A describes a polyvinyl chloride tube/pipe having improved LOI comprising calcium carbonate, titanium oxide, impact modifier, stabilizing agent, lubricant, sepiolite, and an inorganic flame retardant selected from a rare earth hydroxide, aluminum hydroxide, magnesium hydroxide and zinc borate. In the Examples, PVC compositions comprising rare-earth hydroxide, aluminium hydroxide, and magnesium hydroxide are used with Firebrake ZB as flame retardants.

CN1288020A relates to a fire retarding and smoke inhibiting polyvinyl chloride composition comprising fly ash and a smoke inhibiting synergist from zinc borate, antimony trioxide and aluminum hydroxide, as well as a rare earth heat stabilizer such as a fatty acid salt of a rare earth metal. The Examples prepare PVC compositions comprising rare-earth like stabiliser, zinc borate, antimonous oxide, and hydrated alumina.

Other typical examples of flame retardant additives include halogenated organic compounds, such as halogenated paraffins. These additives also are not considered "environmentally friendly" and in some jurisdictions, such as within Europe, are banned from use.

Accordingly, there remains a need for additives for PVC compositions that impart synergistic effects with known flame retardants and/or additional thermal stability. It is desirable to reduce the amount of ATO because of its toxicity, while providing a synergistic flame retardant additive and/or thermal stabilizer and/or acid scavenger and/or smoke suppressant (reduces smoke density, release & acidity) for PVC compositions. This desired additive should have excellent dispersibility in polymer and thermoplastic resin compositions and can be used to prepare flame-retardant and plasticized PVC compositions with excellent flame retardant and mechanical properties.

### Summary

In one embodiment, disclosed herein is a polyvinyl chloride (PVC) composition comprising: PVC resin; an inorganic flame retardant selected from the group consisting of antimony trioxide (ATO), magnesium dihydroxide (MDH), aluminum trihydrate (ATH), and mixtures thereof; and a co-precipitated rare earth additive consisting of a rare earth and one or more of zinc, aluminum, and magnesium, wherein the co-precipitated rare earth additive contains about 5 to about 95% by weight rare earth measured on a rare earth oxide basis. This PVC composition comprises 100 phr of PVC resin and has a UL94 classification with a sample thickness of about 0.8 mm of V-2 or higher. In certain embodiments, this PVC composition has a UL94 classification with a sample thickness of 0.8 mm of V-0.

In certain embodiments, the rare earth compound is yttrium, lanthanum, cerium, neodymium, praseodymium, or a mixture thereof. In specific embodiments the precipitated rare earth additive contains yttrium and zinc; yttrium, zinc, and aluminum; yttrium, zinc, and magnesium; or yttrium, zinc, magnesium, and aluminum.

The combination of the co-precipitated rare earth additive and inorganic flame retardant forms a synergistic partnership. As such, the PVC compositions including the rare earth compound contain an amount of inorganic flame retardant that is less than would be required in the absence of the rare earth compound to achieve the desired flame retardant properties (*i.e.,* a UL94 classification with a sample thickness of about 0.8 mm of V-2 or higher/better). As such, the PVC compositions, including the co-precipitated rare earth additive, are able to contain less inorganic flame retardant (e.g., ATO) in comparison to identical PVC compositions not containing the co-precipitated rare earth additive and achieve the same UL94 classification (*i.e.,* a UL94 classification with a sample thickness of about 0.8 mm of V-2 or higher/better and in some embodiments a UL94 classification with a sample thickness of about 0.8 mm of V-0).

Additionally, the PVC compositions including the co-precipitated rare earth additive exhibit improved properties, including flame retardance properties, in comparison to an identical PVC composition containing the components of the co-precipitated additive but added to the PVC composition as a blend of these components rather than a co-precipitant.

In another embodiment, a PVC composition comprises: PVC resin; ATO; and a co-precipitated rare earth additive consisting of a rare earth, zinc, and optionally aluminum, magnesium, or mixture thereof, wherein the co-precipitated rare earth additive contains about 5 to about 95% by weight rare earth measured on a rare earth oxide basis. This PVC composition comprises 100 phr of PVC resin. This PVC composition has a UL94 classification with a sample thickness of 0.8 mm of V-0, V-1, or V-2 and contains less ATO than in an identical PVC composition not containing the co-precipitated rare earth additive to achieve the same UL94 classification. In certain of these embodiments, this PVC composition has a UL94 classification with a sample thickness of 0.8 mm of V-0. In certain of these embodiments, the co-precipitated rare earth additive contains yttrium. In certain of these embodiments, the PVC composition comprises ATO and co-precipitated rare earth additive collectively in an amount of about 3 phr to about 10 phr.

In specific of any of the above embodiments, this PVC composition can comprise about 0 phr chlorinated paraffins.

### Brief Description of the Drawings

FIG. 1 is a graph illustrating the thermogravimetric analysis of the yttrium hydroxide as synthesized in Example 1.
FIG. 2 is a Differential Scanning Calorimetry of the yttrium hydroxide as synthesized in Example 1 over the temperature range relevant for flame retardancy.
FIG. 3 is a Differential Scanning Calorimetry of the materials of Example 2B to 2E over the temperature range relevant for flame retardancy.
FIG. 4 is a Differential Scanning Calorimetry of materials of Example 3A to 3F over the temperature range relevant for flame retardancy.
FIG. 5 is a Differential Scanning Calorimetry of materials of Example 4A to 4F over the temperature range relevant for flame retardancy.
FIG. 6 is a Differential Scanning Calorimetry of materials of Example 5 and Example 6 over the temperature range relevant for flame retardancy.
FIG. 7 is a graph of the surface area of the material of Example 5 versus drying temperature.
FIG. 8 is a graph of the surface area of the material of Example 6 versus drying temperature.

### Detailed Description

Polyvinyl chloride (PVC) resin is a polymer made from vinyl chloride monomer, and this resin is mixed with other components to make PVC compositions or formulations. These PVC compositions or formulations are used in end-use PVC products.

It is noted that the terms flame and fire are used interchangeably herein in describing the properties of the PVC composition and in describing the additives imparting these properties to the PVC.

ATH interchangeably can be referred to as alumina trihydrate, aluminum trihydrate, or aluminum trihydroxide and in describing this additive, these names can be used interchangeably to mean the same. Additionally flame retardant and flame retardance are used herein interchangeably.

The present disclosure relates to polyvinyl chloride (PVC) compositions having desirable properties, including flame retardancy and good thermal stability and reduced amounts of inorganic flame retardants. The PVC compositions as disclosed herein can be in rigid and flexible forms. The disclosed PVC compositions contain PVC resin, an inorganic flame retardant, and a co-precipitated rare earth additive. The inorganic flame retardant of these compositions can be antimony trioxide (ATO), magnesium dihydroxide (MDH), aluminum trihydrate (ATH), or mixtures thereof. The co-precipitated rare earth additive is composed of a rare earth and one or more of zinc, aluminum, and magnesium. The composition comprises 100 phr of PVC resin and has a UL94 classification with a sample thickness of about 0.8 mm of V-2 or higher/better. In certain embodiments the PVC composition comprises about 1 phr to about 10 phr of the co-precipitated rare earth additive.

The co-precipitated rare earth additive is composed of a rare earth and one or more of zinc, aluminum, and magnesium and contains about 5% to about 95% by weight rare earth measured on a rare earth oxide basis. The rare earth can be a rare earth hydroxide, oxide, or mixture thereof. The zinc can be a zinc oxide, hydroxide, or mixture thereof. The aluminum can be an aluminum hydroxide, oxide, or mixture thereof. The magnesium can be a magnesium oxide, hydroxide, or mixture thereof.

As utilized herein, "co-precipitated" or "co-precipitant" means that that the individual components *(i.e.,* the rare earth and one or more of zinc, aluminum, and magnesium) are combined as solutions and then precipitated together to form a solid *(i.e.,* the co-precipitate). In contrast, a "blend" is where the individual components *(i.e.,* the rare earth and one or more of zinc, aluminum, and magnesium) are combined as solids and blended together as solids to form the "blend".

As described herein, the co-precipitated additive imparts surprisingly better properties to the PVC composition in comparison to an identical PVC composition containing the components of the co-precipitated additive but added to the PVC composition as a blend of these components rather than a co-precipitant.

In certain embodiments, the co-precipitated rare earth additive is composed of rare earth, zinc, and optionally magnesium, aluminum, or a mixture thereof. In specific embodiments, the co-precipitated rare earth additive is composed of rare earth and zinc. In other specific embodiments, the co-precipitated rare earth additive is composed of rare earth, zinc, and magnesium. In further specific embodiments, the co-precipitated rare earth additive is composed of rare earth, zinc, and aluminum. In additional specific embodiments, the co-precipitated rare earth additive is composed of rare earth, zinc, magnesium, and aluminum. In specific of these embodiments the rare earth is yttrium. In these embodiments containing zinc, another advantage of the present PVC compositions is that the co-precipitated rare earth additive can contain zinc within the co-precipitated additive without blackening at elevated temperatures.

Without being bound by the theory, it is believed that combination of the co-precipitated rare earth additive and inorganic flame retardant are a synergistic partnership. The PVC compositions including the co-precipitated rare earth additive contain an amount of inorganic flame retardant that is less than would be required in the absence of the co-precipitated rare earth additive and achieve the desired flame retardant properties *(i.e.,* a UL94 classification with a sample thickness of about 0.8 mm of V-2 or higher/better). Additionally, the PVC compositions including the co-precipitated rare earth additive exhibit improved properties, including flame retardance properties, in comparison to an identical PVC composition containing the components of the co-precipitated additive but added to the PVC composition as a blend of these components rather than a co-precipitant.

As disclosed above, the co-precipitated rare earth additive is composed of a rare earth in an amount of about 5% to about 95% by weight rare earth measured on a rare earth oxide basis. In certain embodiments the co-precipitated rare earth additive is composed of a rare earth in an amount of about 5% to about 90% by weight rare earth measured on a rare earth oxide basis. In particular embodiments the co-precipitated rare earth additive is composed of a rare earth in an amount of about 10% to about 50% by weight rare earth measured on a rare earth oxide basis or about or about 15% to about 45% by weight rare earth measured on a rare earth oxide basis.

Within the co-precipitated rare earth additive, the rare earth is a rare earth hydroxide, rare earth oxide, or mixtures thereof. The rare earth is yttrium (Y), lanthanum (La), neodymium (Nd), praseodymium (Pr), samarium (Sm), europium (Eu), gadolinium (Gd), terbium (Tb), dysprosium (Dy), holmium (Ho), erbium (Er), thulium (Tm), ytterbium (Yb), lutetium (Lu), cerium (Ce), or mixtures thereof. In certain embodiments, the rare earth is yttrium (Y), lanthanum (La), neodymium (Nd), praseodymium (Pr), or mixtures thereof. In particular embodiments, the rare earth is yttrium (hydroxide and/or oxide), lanthanum (hydroxide and/or oxide), cerium (hydroxide and/or oxide), or mixtures thereof.

In certain embodiments, the rare earth of the co-precipitated rare earth additive is yttrium, lanthanum, cerium, neodymium, praseodymium, or mixtures thereof. As described above, the rare earth can be in the form of a rare earth oxide, hydroxide, or mixture thereof. In particular embodiments, the rare earth is yttrium. As such, in particular embodiments, the rare earth in the co-precipitated additive is yttrium hydroxide, yttrium oxide, or a mixture thereof.

In certain embodiments where the rare earth is yttrium, the co-precipitated rare earth additive is composed of yttrium, zinc, and optionally magnesium, aluminum, or a mixture thereof. In specific of these embodiments, the co-precipitated rare earth additive is composed of yttrium and zinc. In other specific embodiments, the co-precipitated rare earth additive is composed of yttrium, zinc, and magnesium. In further specific embodiments, the co-precipitated rare earth additive is composed of yttrium, zinc, and aluminum. In additional specific embodiments, the co-precipitated rare earth additive is composed of yttrium, zinc, magnesium, and aluminum.

In these embodiments of the above particularly recited rare earths, the rare earths additionally may contain minor amounts of any other rare earths. Rare earths commonly exist as mixtures. In certain embodiments, the above particularly recited rare earths additionally may contain minor amounts of neodymium (Nd) and/or samarium (Sm). When present in minor amounts, these minor amounts are typically less than 5% by weight or trace amounts.

In all of these embodiments of the above particularly recited rare earths, the co-precipitated rare earth additive is composed of the rare earth in an amount of about 5% to about 95% by weight rare earth measured on a rare earth oxide basis, and in certain embodiments, in an amount of about 5% to about 90% by weight rare earth measured on a rare earth oxide basis. In particular embodiments the co-precipitated rare earth additive is composed of a rare earth in an amount of about 10% to about 50% by weight rare earth measured on a rare earth oxide basis or about or about 15% to about 45% by weight rare earth measured on a rare earth oxide basis.

In some embodiments, the particle size of the co-precipitated rare earth additive allows the additive to be more readily incorporated into the PVC composition. In these embodiments, the co-precipitated rare earth additive can have a particle size of less than 10 microns. In certain of these embodiments, the co-precipitated rare earth additive has a particle size of about 0.1 microns to about 10 microns. If necessary, the particle size distribution can be altered by milling and separation processes to generate a more uniform particle size distribution. The particle size as described herein is measured using a Malvern Mastersizer 2000. This particle size can be combined with any of the particularly recited embodiments of the co-precipitated rare earth additive.

The co-precipitated rare earth additive can have a surface area that is increased by an increase in temperature. This surface area allows for more of the additive's components to interact with the decomposition products of PVC and allow for improved suppression of combustion.

In the PVC compositions as disclosed herein, the co-precipitated rare earth additive may be present in an amount of about 1 phr to about 10 phr. In certain embodiments, the co-precipitated rare earth additive may be present in an amount of about 1 phr to about 6 phr. These amounts of co-precipitated rare earth additive can be combined with any of the particularly recited embodiments of the co-precipitated rare earth additive.

As described herein, the addition of these co-precipitated rare earth additives to the PVC compositions allow the PVC compositions to exhibit desirable and necessary flame retardancy, while allowing for reduced amounts of these inorganic flame retardants (and in particular ATO). As such, the PVC compositions as disclosed herein contain reduced amounts of these inorganic flame retardants (and in particular ATO) while achieving the same UL94 classification (*i.e.,* a UL94 classification with a sample thickness of about 0.8 mm of V-2 or higher/better, and in some embodiments, a UL94 classification with a sample thickness of about 0.8 mm of V-0) as an identical PVC composition not containing the co-precipitated rare earth additive. Additionally, the PVC compositions including the co-precipitated rare earth additive exhibit improved properties, including flame retardance properties, in comparison to an identical PVC composition containing the components of the co-precipitated additive but added to the PVC composition as a blend of these components rather than a co-precipitant.

Within the PVC compositions, it is believed that the co-precipitated rare earth additive releases coordinated water species at temperatures exceeding 200°C. These rare earths in the co-precipitated additive have an ability to hold on to water at high temperatures. Without being bound by the theory, the release of water can cool and dilute the combustion process of the PVC composition and/or end-use PVC product. In particular for PVC wiring, the release of water in the 200-600°C temperature range is advantageous. The endothermic reaction results in the formation of an oxide layer which acts as an insulating barrier, inhibiting the release of gases that can contribute to pyrolysis of the PVC. Without being bound, the thermal stabilization properties of the rare earths in the co-precipitated additive in PVC delays the release of corrosive HCl and is a key attribute to their surprising desirability in the PVC compositions.

Another advantage of the present PVC compositions is that the co-precipitated rare earth additive containing a rare earth and zinc can increase the desirable flame retardant properties without blackening at elevated temperatures. Typically, when zinc additives are used in PVC formulations, at elevated temperatures the zinc compound will react with released HCl to form zinc chloride (ZnCl₂) which is a strong Lewis acid and promotes cross-linking and charring reactions in PVC resulting in a black color forming. The blackening of the PVC in the temperature range 200-600°C mars the appearance of PVC. While the Zn may impart fire retardant properties to the PVC, the blackening changes the appearance in a negative way. As such, the PVC compositions including the co-precipitated rare earth additive can contain zinc and improve flame retardancy without blackening at elevated temperatures.

As described above, the inorganic flame retardant of these compositions is antimony trioxide (ATO), magnesium dihydroxide (MDH), aluminum trihydrate (ATH), or mixtures thereof. In particular embodiments, the inorganic flame retardant of these compositions is antimony trioxide (ATO). The inorganic flame retardants may be present in an amount of about 1 phr to about 60 phr within the PVC composition. When ATO, the ATO may be present in an amount of about 1 phr to about 10 phr, and in particular embodiments, the ATO may be present in an amount of about 1 phr to about 6 phr. The PVC industry is interested in PVC compositions in which the amount of these inorganic flame retardants (in particular ATO) is minimized while still achieving the desired flame retardancy and thermal stability.

In certain embodiments, the inorganic flame retardant is antimony trioxide (ATO). As such, in certain embodiments the PVC compositions contain ATO. Through the combination of the co-precipitated rare earth additive and ATO, the PVC composition is able to contain less ATO than in an identical PVC composition not containing the co-precipitated rare earth additive and achieve the same UL94 classification (*i.e.,* a UL94 classification with a sample thickness of about 0.8 mm of V-2 or higher/better, and in some embodiments, a UL94 classification with a sample thickness of about 0.8 mm of V-0). ATO is a highly effective flame retardant; however, it is considered highly toxic and produces a large degree of smoke during a combustion event. Thus, minimizing the amount of ATO required to achieve a PVC composition with acceptable flame retardancy and thermal stability is a significant advantage. Additionally, the PVC compositions including the co-precipitated rare earth additive exhibit improved properties, including flame retardance properties, in comparison to an identical PVC composition containing the components of the co-precipitated additive but added to the PVC composition as a blend of these components rather than a co-precipitant.

In the disclosed PVC compositions when the inorganic fire retardant is ATO, it is generally present in an amount of about 1 phr to about 6 phr.

In certain embodiments, the inorganic flame retardant is MDH. As such, in certain embodiments the PVC compositions contain MDH. When the inorganic fire retardant is MDH, it is generally present in an amount of about 15 phr to about 50 phr. In certain embodiments containing MDH, the PVC composition contains about 25 phr to about 50 phr MDH. In other embodiments containing MDH, the PVC composition contains about 30 phr to about 50 phr MDH. The utility of MDH can be limited by its compatibility with particular PVC compositions, and MDH can have relatively limited loading capacity before negatively affecting physical and aesthetic characteristics of the PVC product. Through the combination of the co-precipitated rare earth additive and MDH, the PVC composition is able to contain less MDH than in an identical PVC composition not containing the co-precipitated rare earth additive and achieve the same UL94 classification (*i.e.,* a UL94 classification with a sample thickness of about 0.8 mm of V-2 or higher/better, and in some embodiments, a UL94 classification with a sample thickness of about 0.8 mm of V-0). In addition, in certain of these embodiments with MDH and co-precipitated rare earth additive, the PVC composition is able to contain about zero phr (i.e., no) ATO and have a desirable UL94 classification (*i.e.,* a UL94 classification with a sample thickness of about 0.8 mm of V-2 or higher/better, and in some embodiments, a UL94 classification with a sample thickness of about 0.8 mm of V-0).

In other embodiments, the inorganic flame retardant is ATH. As such, in certain embodiments the PVC compositions contain ATH. When the inorganic flame retardant is ATH, it is generally present in an amount of about 15 phr to about 50 phr. In certain embodiments containing ATH, the PVC composition contains about 25 phr to about 50 phr MDH. In other embodiments containing ATH, the PVC composition contains about 30 phr to about 50 phr MDH. The utility of ATH can be limited by its compatibility with particular PVC compositions, and ATH can have relatively limited loading capacity before negatively affecting physical and aesthetic characteristics of the PVC product. Through the combination of the co-precipitated rare earth additive and ATH, the PVC composition is able to contain less ATH than in an identical PVC composition not containing the co-precipitated rare earth additive and achieve the same UL94 classification (*i.e.,* a UL94 classification with a sample thickness of about 0.8 mm of V-2 or higher/better, and in some embodiments, a UL94 classification with a sample thickness of about 0.8 mm of V-0). In addition, in certain of these embodiments with ATH and co-precipitated rare earth additive, the PVC composition is able to contain about zero phr (i.e., no) ATO and have a desirable UL94 classification (*i.e.,* a UL94 classification with a sample thickness of about 0.8 mm of V-2 or higher/better, and in some embodiments, a UL94 classification with a sample thickness of about 0.8 mm of V-0).

In other embodiments, the inorganic flame retardant is a mixture of ATO and MDH and/or ATH. When the inorganic flame retardant is a mixture of MDH and/or ATH with ATO, the mixture is present in an amount of about 16 phr to about 56 phr. Through the combination of the co-precipitated rare earth additive with this mixture of inorganic flame retardant, the PVC composition is able to contain less ATO than in an identical PVC composition not containing the co-precipitated rare earth additive and achieve the same UL94 classification (*i.e.,* a UL94 classification with a sample thickness of about 0.8 mm of V-2 or higher/better, and in some embodiments, a UL94 classification with a sample thickness of about 0.8 mm of V-0).

The present PVC compositions exhibit desirable and necessary flame retardancy for the end-uses of the PVC composition, while allowing for reduced amounts of these inorganic flame retardants (and in particular ATO) through the addition of the co-precipitated rare earth additive to the composition. The present PVC compositions also exhibit desirable and necessary thermal stability for the end-uses of the PVC compositions, while allowing for reduced amounts of these inorganic flame retardants through the addition of the co-precipitated rare earth additive to the composition. Additionally, the PVC compositions including the co-precipitated rare earth additive exhibit improved properties, including flame retardance properties, in comparison to an identical PVC composition containing the components of the co-precipitated additive but added to the PVC composition as a blend of these components rather than a co-precipitant.

The disclosed PVC compositions exhibit desirable and necessary flame retardancy measured and determined by UL94 classification. UL94 is a plastics flammability standard released by the Underwriters Laboratories (USA). The standard classifies plastics according to how they burn in various orientations and thicknesses from the lowest flame-retardant to most flame-retardant in six different classifications. The PVC compositions as disclosed herein have a UL94 classification with a sample thickness of about 0.8 mm of V-2 or higher/better (*i.e.,* V-1 and V-0 are higher better classifications than V-2). In some embodiments, the PVC compositions as disclosed herein have a UL94 classification with a sample thickness of about 0.8 mm of V-0.

**Table 1 UL94 classifications**

| **UL94 Classification** | **Orientation of sample** | **Definition** | **Time of Burn Allowed** | **Particle drop allowed** | | **Plaque holes** |
|---|---|---|---|---|---|---|
| | | | | **Flaming** | **Non-Flaming** | |
| HB | Horizontal | Slow burning | | | | |
| V-2 | Vertical | Burning stops | 30 sec | Yes | Yes | |
| V-1 | Vertical | Burning stops | 30 sec | No | Yes | |
| V-0 | Vertical | Burning stops | 10 sec | No | Yes | |
| 5VB | Vertical | Burning stops | 60 sec | No | No | Yes |
| 5VA | Vertical | Burning stops | 60 sec | No | No | No |

In certain embodiments, the PVC compositions as disclosed herein have a UL94 classification with a sample thickness of about 0.8 mm of V-2, V-1, or V-0. In specific embodiments, the PVC compositions as disclosed herein have a UL94 classification with a sample thickness of about 0.8 mm of V-0.

The PVC compositions as disclosed herein contain 100 phr of PVC resin. The inorganic flame retardant(s) and co-precipitated rare earth additive(s) are added to this PVC resin as additives and provide the PVC composition. This PVC composition can be used in a variety of end-use PVC products. As described above, the inorganic flame retardant and co-precipitated rare earth additive interact in a synergistic manner such that the PVC composition contains a reduced amount (in phr) of inorganic flame retardant than is typically required to achieve the UL94 classification with a sample thickness of about 0.8 mm of V-2 or higher/better. In certain embodiments, the PVC composition also can have a CongoRed at 200°C of about 90 mins to about 200 mins. Additionally, the PVC compositions including the co-precipitated rare earth additive exhibit improved properties, including flame retardance properties, in comparison to an identical PVC composition containing the components of the co-precipitated additive but added to the PVC composition as a blend of these components rather than a co-precipitant.

As such, the PVC compositions containing the co-precipitated rare earth additive contain reduced amounts of these inorganic flame retardants (and in particular ATO) while achieving the same UL94 classification (*i.e.,* a UL94 classification with a sample thickness of about 0.8 mm of V-2 or higher/better, and in some embodiments, a UL94 classification with a sample thickness of about 0.8 mm of V-0) as an identical PVC composition not containing the co-precipitated rare earth additive.

The polyvinyl chloride (PVC) compositions disclosed herein comprise PVC resin; an inorganic flame retardant selected from the group consisting of antimony trioxide (ATO), magnesium dihydroxide (MDH), aluminum trihydrate (ATH), and mixtures thereof; and a co-precipitated rare earth additive; wherein the composition comprises 100 phr of PVC resin and has a UL94 classification with a sample thickness of about 0.8 mm of V-2 or higher/better. In certain embodiments the PVC composition has a UL94 classification with a sample thickness of about 0.8 mm of V-0. The co-precipitated rare earth additive is as described herein and consists of a rare earth and one or more of zinc, aluminum, and magnesium, wherein the co-precipitated rare earth additive contains about 5 to about 95% by weight rare earth measured on a rare earth oxide basis. The co-precipitated rare earth additive includes all embodiments as described herein.

Traditional PVC compositions containing ATO as an inorganic fire retardant, contain more ATO than the amount of ATO that is required in the present PVC compositions to achieve the UL94 classification. Containing less ATO is advantageous because ATO is considered highly toxic. In the PVC compositions disclosed herein, the amount of ATO is reduced while achieving the same UL94 classification. In embodiments of the PVC composition wherein the inorganic flame retardant is ATO, the ratio of ATO to co-precipitated rare earth additive can be about 1:3 to about 3:1. In certain of these embodiments, the ratio of ATO:co-precipitated rare earth additive is about 1:1 to about 1:2, and in particular embodiments the ratio of ATO:co-precipitated rare earth additive is about 1:1.

In certain embodiments where the inorganic flame retardant is ATO, the PVC composition collectively can comprise about 3 phr to about 10 phr of ATO and co-precipitated rare earth additive. In certain of these embodiments the co-precipitated rare earth additive includes yttrium as the rare earth. In specific embodiments, the PVC composition can comprise about 1 to about 3.5 phr ATO and about 1 to about 4.5 phr co-precipitated rare earth additive, and in certain of these embodiments the co-precipitated rare earth additive includes yttrium as the rare earth.

In certain of the embodiments where the inorganic fire retardant is ATO, the co-precipitated rare earth additive contains yttrium and zinc. In certain of these embodiments the yttrium:zinc ratio can be about 90:10 to about 10:90 and the ratio of ATO:co-precipitated rare earth additive can be about 1:3 to about 3:1. In certain of these embodiments, the ratio of ATO:co-precipitated rare earth additive is about 1:1 to about 1:2, and in particular embodiments the ratio of ATO:co-precipitated rare earth additive is about 1:1. The PVC composition collectively can comprise about 3 phr to about 10 phr of ATO and co-precipitated rare earth additive wherein the additive contains yttrium and zinc. In any of these embodiments, the PVC composition can comprise about 1 to about 3.5 phr ATO and about 1 to about 4.5 phr co-precipitated rare earth additive, wherein the additive contains yttrium and zinc.

In certain of the embodiments where the inorganic fire retardant is ATO, the co-precipitated rare earth additive contains yttrium, zinc, and magnesium. In certain of these embodiments the co-precipitated rare earth additive contains about 5% to about 90% by weight yttrium, about 5% to about 50% by weight zinc, and about 5% to about 90% by weight magnesium, as measured on a yttrium, zinc, magnesium oxide basis. In these embodiments, the ratio of ATO:co-precipitated rare earth additive can be about 1:3 to about 3:1. In certain of these embodiments, the ratio of ATO:co-precipitated rare earth additive is about 1:1 to about 1:2, and in particular of these embodiments the ratio of ATO:co-precipitated rare earth additive is about 1:1. In specific of these embodiments where the inorganic fire retardant is ATO and the co-precipitated rare earth additive contains yttrium, zinc, and magnesium, the ratio of yttrium, zinc, and magnesium can be about 40:20:40.

The PVC composition collectively can comprise about 3 phr to about 10 phr of ATO and co-precipitated rare earth additive wherein the additive contains yttrium, zinc, and magnesium. In any of these embodiments, the PVC composition can comprise about 1 to about 3.5 phr ATO and about 1 to about 4.5 phr co-precipitated rare earth additive, wherein the additive contains yttrium, zinc, and magnesium.

In certain of the embodiments where the inorganic fire retardant is ATO, the co-precipitated rare earth additive contains yttrium, zinc, and aluminum. In certain of these embodiments the co-precipitated rare earth additive contains about 5% to about 90% by weight yttrium, about 5% to about 50% by weight zinc, and about 5% to about 90% by weight aluminum, as measured on a yttrium, zinc, aluminum oxide basis. In these embodiments, the ratio of ATO:co-precipitated rare earth additive can be about 1:3 to about 3:1. In certain of these embodiments, the ratio of ATO:co-precipitated rare earth additive is about 1:1 to about 1:2, and in particular of these embodiments the ratio of ATO:co-precipitated rare earth additive is about 1:1. In specific of these embodiments where the inorganic fire retardant is ATO and the co-precipitated rare earth additive contains yttrium, zinc, and aluminum, the ratio of yttrium, zinc, and aluminum can be about 40:20:40.

The PVC composition collectively can comprise about 3 phr to about 10 phr of ATO and co-precipitated rare earth additive wherein the additive contains yttrium, zinc, and aluminum. In any of these embodiments, the PVC composition can comprise about 1 to about 3.5 phr ATO and about 1 to about 4.5 phr co-precipitated rare earth additive, wherein the additive contains yttrium, zinc, and aluminum.

In other embodiments, the PVC compositions contain MDH. In certain of these embodiments, the PVC composition contains about 25 phr to about 50 phr MDH and about 3 phr to about 10 phr co-precipitated rare earth additive. In particular embodiments, the PVC composition contains about 30 phr to about 50 phr MDH. In particular embodiments, the PVC composition contains about 3 phr to about 6 phr co-precipitated rare earth additive. In certain of these embodiments, the co-precipitated rare earth additive contains yttrium, zinc, and optionally magnesium, aluminum, or a mixture thereof.

Through the combination of the co-precipitated rare earth additive and MDH, the PVC composition is able to contain less MDH than in an identical PVC composition not containing the co-precipitated rare earth additive and achieve the same UL94 classification (*i.e.,* a UL94 classification with a sample thickness of about 0.8 mm of V-2 or higher/better, and in some embodiments, a UL94 classification with a sample thickness of about 0.8 mm of V-0). In addition, in certain of these embodiments with MDH and co-precipitated rare earth additive, the PVC composition is able to contain about zero phr (i.e., no) ATO and have a desirable UL94 classification (*i.e.,* a UL94 classification with a sample thickness of about 0.8 mm of V-2 or higher/better, and in some embodiments, a UL94 classification with a sample thickness of about 0.8 mm of V-0).

In embodiments with MDH and no ATO, the PVC compositions can contain about 25 phr to about 50 phr MDH and about 3 phr to about 10 phr co-precipitated rare earth additive, or in particular embodiments about 30 phr to about 50 phr MDH and/or about 3 phr to about 6 phr co-precipitated rare earth additive. In certain of these embodiments, the co-precipitated rare earth additive contains yttrium, zinc, and optionally magnesium, aluminum, or a mixture thereof.

All of the embodiments of the PVC compositions of the present invention have UL94 classification with a sample thickness of about 0.8 mm of V-2 or higher/better. In certain embodiments, these PVC compositions have UL94 classification with a sample thickness of about 0.8 mm of V-0.

In addition to the inorganic flame retardant and co-precipitated rare earth additive, the PVC compositions can further contain additional additives to impart desirable properties to the PVC. The choice of additives used for the PVC composition is controlled by the performance requirements of the end-use finished product and its specification. For example, underground pipes, siding, intravenous tubing, and flooring have very different performance requirements and thus, require different additives so that the PVC composition is suitable for the end-use product. One of skill in the art understands how to select the additives based on the desired end use. These additives can be fillers, plasticizers, colorants, stabilizers, lubricants, organic flame retardants, smoke suppressants, and mixtures thereof.

It is noted that certain additives can have multiple functions within a PVC composition and one of skill in the art will recognize these multiple functions. As such, the additives with functions as described below are not limiting as to their functions and these additives are categorized by what one of ordinary skill in the art may consider as a primary function of including the particular additive.

The amount of additional additives included in the PVC composition also is controlled by the performance requirements and/or physical characteristics desired for the end-use finished product and its specification(s). The PVC compositions disclosed herein can include amounts of these additional additives such that these additional additives do not alter the decomposition enthalpy of the composition by about 10% or more, and therefore, do not materially affect the flame/fire retardance properties of the PVC compositions as imparted by the inorganic flame retardant in combination with the co-precipitated rare earth additive.

The additives and the amounts of those additives readily can be determined by one of skill in the art.

Fillers are primarily used for cost reduction but also may impart desired properties such as rigidity, flexural modulus, hardness, and density. Fillers that are non-burning further may act, to a limited extent, as flame retardants or smoke suppressants. Fillers that may be included in the PVC compositions as described herein include, for example, calcium carbonates, silicas, silicates, clay, kaolin, magnesium silicates (talc), glass fibers, mica, wollastonite, sodium sulfate (Na₂SO₄), sodium sulfate decahydrate, barium sulfate (BaSO₄), sulfates of the alkaline earth metals, and the like. When present, fillers may be in an amount of about 2 phr to about 400 phr.

Plasticizers can soften PVC compositions, improve processability by reducing viscosity, and improve impact resistance. Some plasticizers that are non-burning further may act, to a limited extent, as flame retardants. Plasticizers that may be included in the PVC compositions as described herein include, for example, ATBC (Acetyl tributyl citrate), DIDP (Diisodecyl phthalate), DINP (Diisononyl phthalate), DOP (dioctyl phthalate or bis(2-ethylhexyl) phthalate), DOTP (dioctyl terephthalate or bis(2-ethylhexyl) terephthalate), and TOTM (Trioctyl trimellitate). Plasticizers generally include phthalates, trimelliates, adipates, adipate diesters, sebacates, benzoates, epoxies, epoxidized soya bean oil, organic phosphates, phosphate esters, polyesters, and the like. Examples of phosphates include, for example, triphenyl phosphate, trixylenyl phosphates, tricresyl phosphate, 2-ethylhexyl diphenyl phosphate (SANTICIZER 141), isodecyl diphenyl phosphate (SANTICIZER 148), octyl diphenyl phosphate (DISFLAMMOL DPO), 2-isopropylphenyl diphenyl phosphate, 3-isopropylphenyl diphenyl phosphate, 4-isopropylphenyl diphenyl phosphate, di(2-isopropylphenyl) phenyl phosphate, and the like. When present, plasticizers may be in an amount of about 15 phr to about 150 phr. Rigid PVC contains no (about 0 phr) plasticizers.

In certain embodiments, the PVC compositions as described herein comprise a plasticizer selected from the group consisting of Dioctyl terephthalate (DOTP), Diisononyl phthalate (DINP), Diisodecyl phthalate (DIDP), and mixtures thereof. In specific of these embodiments, the PVC composition comprises about 35 phr to about 70 phr of the plasticizer. In particular embodiments, the PVC composition comprises about 50 phr Dioctyl terephthalate (DOTP). These specific amounts and types of plasticizers may be included in any of the PVC embodiments as set forth herein.

In particular embodiments of rigid PVC compositions, including any of the embodiments as set forth herein, the PVC compositions comprise about 0 phr of plasticizer.

Colorants can be pigments and/or dyes and are chosen based on color stability, strength, specific gravity, clarity, and electrical properties of the PVC composition and end use product. Pigments are generally insoluble in the PVC composition and can be inorganic or organic compounds. Pigments are dispersed throughout the PVC composition. Pigments are generally chosen based on color stability and compatibility with the PVC composition. Dyes generally are soluble in the PVC composition and also can be inorganic or organic compounds. Pigments that may be included in the PVC compositions as described herein include, for example, inorganic pigments and organic pigments. Inorganic pigments include, for example, titanium dioxide (TiO₂), lead chromate, lead sulfochromate, iron oxide, and Ultramarine blue (a sulfur-containing sodium aluminium silicate). Organic pigments include, for example, carbon black, copper phthalocyanine, diazo condensation products, diazo compounds, polycyclic compounds like dioxazine, quinacridone, isoindolinone, and monoazo compounds like benzimidazolone. When present, colorants may be in an amount of about 1 phr to about 10 phr. When present, pigments may be in an amount of about 1 phr to about 10 phr. When present, dyes may be in an amount of about 1 phr to about 10 phr.

Stabilizers are commonly used PVC additives. Stabilizers help to prevent the initial release of hydrogen chloride, elimination of labile chlorine and carbenium ions, autoxidation, and the addition of polyene sequences all of which contribute to the chain reaction of decomposition. Stabilizers further can increase the PVC composition's resistance to daylight, weathering, and heat ageing, and have an important influence on the physical properties and the cost of a formulation. They can be supplied in the form of application-specific blends of which the main constituents can be metal soaps, metal salts, and organometallic compounds. The choice of heat stabilizer depends on a number of factors, including the technical requirements of the PVC product, regulatory approval requirements, and cost.

Stabilizers that may be included in the PVC compositions as described herein include, for example, antioxidants, antiozonants, light stabilizers, quenchers, acid scavengers, and the like.

Examples of antioxidants include phenolic antioxidants, analogues of phloretic acid, phosphite esters, phosphites, tri(2,4-di-tert-butylphenyl)phosphite, and thioethers.

Examples of antiozonants include p-phenylenediamine.

Examples of light stabilizers include hindered amine light stabilizers (HALS), benzotriazoles, benzophenones, organic nickel compounds, and nickel phenolates.

Examples of acid scavengers include metallic soaps, barium stearate, calcium stearate, hydocalumite, calcium oxide, zinc oxide, magnesium oxide, tin, lead, mono and dialkyl tin salts, thio acid half esters such as thio-glycollates often known as thiotins or mercaptides.

Examples of general stabilizers that may impart one or more desired properties are dicarboxylic half esters, often referred to as maleates or carboxylates, mono or dialkyl tin compounds, dibutyltin dichloride (DBTC), dimethyltin dichloride (DMTC), monobutyltin trichloride (MBT), monomethyltin trichloride (MMT), tetra-basic lead sulphate, tri-basic lead sulphate, di-basic lead phosphite, di-basic lead phthalate, di-basic lead stearate, lead stearate, and the like.

When present, stabilizers may be in an amount of about 0.5 phr to about 70 phr. In certain embodiments, stabilizers may be in an amount of about 0.5 phr to about 10 phr.

Lubricants, either external or internal, are added to reduce friction from polymer chain slippage (internal) or between the PVC composition and external surfaces. Lubricants that may be included in the PVC compositions as described herein include, for example, fatty acids, waxes, hydrocarbon wax, polyethylene wax, glycerin dioleate, glycerin monostearate, zinc laurate, glycerin diol, calcium hydroxystearate, EBS ethylene bis(stearamide), hydrogenated castor oil, stearyl stearate, sodium stearyl fumarate, magnesium stearate, zinc stearate, and the like. When present, lubricants may be in an amount of about 0.1 phr to about 1 phr.

Organic flame retardants that may be included in the PVC compositions as described herein include, for example, chlorinated paraffins and brominated organic compounds (like polybrominated diphenyl ethers, polybrominated biphenyl, brominated cyclohydrocarbons), and the like. When present, organic fire retardants may be present in an amount of about 1 phr to about 25 phr.

In certain embodiments the PVC compositions as described herein, including any of the specific embodiments, comprise an organic flame retardant, and in certain of these embodiments, the organic flame retardant is one or more chlorinated paraffins. In these embodiments, the chlorinated paraffins may be present in an amount of about 1 phr to about 25 phr.

However, these halogenated organic flame retardant additives, and in particular chlorinated paraffins, are not considered "environmentally friendly". In some jurisdictions, such as within Europe, these chlorinated paraffins are banned from use. Thus, in certain embodiments of the PVC compositions as disclosed herein, including any of the specific embodiments, the compositions comprise about 0 phr (i.e., no) chlorinated paraffins. It is an advantage of the present PVC compositions that these PVC compositions can achieve the UL94 classification and not require these chlorinated paraffins.

Smoke suppressants that may be included in the PVC compositions as described herein include, for example, ammonium octamolybdate, molybdenum trioxide, zinc borate (2ZnO 3B₂O₃·3.5H₂O, or ZnO B₂O₃·2H₂O, or 2ZnO 2B₂O₃·3H₂O), barium borate, copper oxalate, zinc stannates (ZnSnO₃), zinc hydroxystannate (ZnSn(OH)₆), zinc sulfide, and the like. Zinc hydroxy stannate also can have some flame retardant properties. When present, smoke suppressants may be present in an amount of about 1 phr to about 20 phr.

Further optional additives may include one or more of the following:
Blowing agents or foaming agents, which are used to create a cellular structure or a foam by decomposing under heat to release a gas. These blowing or foaming agents include, for example, carbonates, ammonium carbonate, sodium carbonate, azo compounds, azodicarbonamide (azo-bisformamide) in amounts of about 0.3 phr to about 1 phr;
Microspheres;
Water repellents;
Impact modifiers, which function to increase toughness, such as chlorinated polyethylene and acrylic copolymers such as MBS (methylacrylate butadiene styrene); MABS (methacrylateacrylonitrile-butadiene-styrene copolymers), (NPDEs) non-predefined elastomers;
Matting agents, such as methyl methacrylate;
Process oils/base, such as paraffin oil in an amount of about 1 phr to about 2 phr;
Processing aids; and
Solvents and intermediates, such as methyl ethyl ketone, methyl isobutyl ketone, and white spirit.

One of skill in the art understands how to select the appropriate additives and amount (in phr) of these additives to include to provide a PVC composition meeting the performance requirements and/or physical characteristics desired for the end-use finished product and its specification(s). This end-use PVC product also may be dyed to meet desired physical characteristics.

These additional additives must be PVC formulating friendly and exhibit good compatibility with the other PVC composition components. Tensile strength and mechanical properties such as processability of the PVC product may be important crucial.

The rare earths in the co-precipitated additive used in the PVC compositions as described herein have several advantageous attributes as a PVC additive including 1) a significant endothermic decomposition which releases water and forms a refractory oxide layer, 2) halogen-free, 3) non-toxic and stable, 4) Non-volatile and chemical neutrality, 5) aesthetically colorless, 6) ready availability and economically viable, 7) readily processable into small particle sizes, 8) low solubility and leachability, 9) acid scavenger ability to trap the HCl, 10) thermal stabilization, and 11) smoke suppressant.

As described above, the disclosed PVC compositions have a UL94 classification with a sample thickness of about 0.8 mm of V-2 or higher/better. In certain embodiments, these PVC compositions as disclosed herein have a UL94 classification with a sample thickness of about 0.8 mm of V-2, V-1, or V-0. In particular embodiments, these PVC compositions as disclosed herein have a UL94 classification with a sample thickness of about 0.8 mm of V-0.

The disclosed PVC compositions also can exhibit desirable thermal stability as measured by CongoRed at 200°C. The CongoRed test method determines the thermal stability of a PVC composition when processed at a high temperature. The method is applicable to all PVC compositions, copolymers and products based on them. The CongoRed test is performed at a temperature of 200°C according to the procedure as outlined in International Standard ISO 182-1. The time (in minutes) taken for the material to degrade, indicated by evolution of hydrogen chloride, is determined by a change of color in a CongoRed test paper. In certain embodiments, the PVC compositions including the co-precipitated rare earth additive exhibit improved thermal stability as measured by CongoRed at 200°C in comparison to an identical PVC composition containing the components of the co-precipitated additive but added to the PVC composition as a blend of these components rather than a co-precipitant.

In certain embodiments, the PVC compositions as disclosed herein, including any of the above specified embodiments, have a CongoRed at 200°C of about 90 mins to about 200 mins.

In certain embodiments, the PVC compositions containing the co-precipitated rare earth additive contain reduced amounts of these inorganic flame retardants (and in particular ATO) while achieving the same CongoRed at 200°C as an identical PVC composition not containing the co-precipitated rare earth additive. In further embodiments, the PVC compositions containing the co-precipitated rare earth additive contain reduced amounts of these inorganic flame retardants (and in particular ATO) while achieving an improved CongoRed at 200°C as an identical PVC composition not containing the co-precipitated rare earth additive. Additionally, the PVC compositions including the co-precipitated rare earth additive can exhibit improved Congo Red at 200°C in comparison to an identical PVC composition containing the components of the co-precipitated additive but added to the PVC composition as a blend of these components rather than a co-precipitant.

The disclosed PVC compositions also can exhibit desirable limiting oxygen index (LOI) indicating the flammability of the PVC composition in terms of the minimum concentration of oxygen that is required to allow the PVC composition to sustain a flame/burn. The limiting oxygen index (LOI) of the PVC compositions as disclosed herein is determined according to ASTM D2863. In certain embodiments, the PVC compositions as disclosed herein, including any of the above specified embodiments, have a LOI of about 20 to about 35. Additionally, the PVC compositions including the co-precipitated rare earth additive can exhibit improved LOI in comparison to an identical PVC composition containing the components of the co-precipitated additive but added to the PVC composition as a blend of these components rather than a co-precipitant.

The disclosed PVC compositions further can exhibit desirable smoke density as measured by ASTM D2843-22 (https://www.astm.org/d2843-22 html). This fire-test-response test method covers a laboratory procedure for measuring and observing the relative amounts of smoke obscuration produced by the burning or decomposition of plastics, including PVC. It is intended to be used for measuring the smoke-producing characteristics of plastics under controlled conditions of combustion or decomposition. The measurements are made in terms of the loss of light transmission through a collected volume of smoke produced under controlled, standardized conditions. In certain embodiments, the PVC compositions including the co-precipitated rare earth additive can exhibit improved smoke density as measured by ASTM D2843-22 in comparison to an identical PVC composition containing the components of the co-precipitated additive but added to the PVC composition as a blend of these components rather than a co-precipitant.

Without being bound by the theory, the PVC compositions as disclosed herein comprising an inorganic flame retardant in combination with a co-precipitated rare earth additive may be able to absorb heat produced during combustion by undergoing an endothermic release upon heating, particularly throughout the range of temperatures relevant to combustion of the PVC composition/product. For instance, the co-precipitated rare earth additives as disclosed herein release water upon heating. This endothermic release absorbs heat energy from the surrounding material to slow combustion, and the release of the water further dampens combustion by limited access to oxygen and cooling the surrounding material. In some embodiments, the PVC compositions disclosed herein can interrupt an otherwise self-sustaining combustion cycle of the PVC. As noted above, this can be an endothermic process, and therefore, reduce the heat below the threshold needed to sustain combustion of the PVC. In addition to absorbing heat through the endothermic release, the water released during oxidation can further cool and dilute the oxygen necessary to the combustion process.

The rare earths in the co-precipitated additive also can behave as Lewis acid catalysts resulting in an acid scavenging function, by producing a chlorinated Lewis acid catalyst. This action may absorb acidic gases emitted during combustion of the PVC composition, such as HCl. Upon combustion, the rare earths in the co-precipitated additive can form an insulating carbonaceous char layer via crosslinking, and due to strong acid scavenger characteristics, also can sequester HCl gas from smoke within the char layer, thereby decreasing smoke acidity. As such, the rare earths in the co-precipitated additive may be able to seal the PVC and inhibit the release of gasses from the combustible components that would otherwise contribute to continuing pyrolysis. In this manner, the combustible portion of the PVC can be effectively sequestered from the ignition source upon oxidation of the rare earths in the co-precipitated additive by heating. In certain embodiments, the strong oxophilicity of the rare earths in the co-precipitated additive may contribute to reduction of chloride during combustion, by formation of chloride intermediates that are stable up to 1000°C. Thus, the rare earth co-precipitated additives are unexpectedly advantageous additives/components of the PVC compositions as disclosed herein. The PVC compositions including the co-precipitated rare earth additive exhibit improved properties, including flame retardance properties, in comparison to an identical PVC composition containing the components of the co-precipitated additive but added to the PVC composition as a blend of these components rather than a co-precipitant.

The co-precipitated rare earth additives allow for reduced amounts of the inorganic flame retardants (an in particular ATO) and achieve the same UL94 classification (*i.e.,* a UL94 classification with a sample thickness of about 0.8 mm of V-2 or higher/better, and in some embodiments, a UL94 classification with a sample thickness of about 0.8 mm of V-0) as an identical PVC composition not containing the co-precipitated rare earth additives.

When PVC burns a significant amount of smoke is released/generated. When ATO is used as a flame retardant in PVC and the PVC is burned, the ATO likely reacts with released HCl to ultimately form antimony trichloride. Antimony trichloride is volatile with a boiling point of 283°C. This results in increased smoke levels when ATO is present. Since ATO is toxic and releases into the smoke, reduction of the amount of smoke is desirable, especially when using ATO in the PVC composition. The co-precipitated rare earth additives as disclosed herein allow for reduction of ATO and this reduces the amount of smoke, as well as the amount of ATO in any smoke produced. Additionally, smoke is not solely due to the presence of ATO. The co-precipitated rare earth additives also reduce smoke by reacting with compounds released in a combustion event, either by acting as a Lewis acid or adsorption, and this further aids in smoke reduction. As such, the co-precipitated rare earth additives allow for reduced amounts of smoke, and in certain embodiments, PVC compositions containing the co-precipitated rare earth additives can exhibit improved smoke density as measured by ASTM D2843-22 in comparison to an identical PVC composition containing the components of the co-precipitated additive but added to the PVC composition as a blend of these components rather than a co-precipitant.

In one particular embodiment of the PVC composition, it comprises PVC resin; ATO; and a co-precipitated rare earth additive consisting of a rare earth, zinc, and optionally aluminum, magnesium, or mixture thereof, wherein the co-precipitated rare earth additive contains about 5 to about 95% by weight rare earth measured on a rare earth oxide basis. In certain of these embodiments the rare earth is yttrium. This PVC composition comprises 100 phr of PVC resin and has a UL94 classification with a sample thickness of 0.8 mm of V-0, V-1, or V-2, and the PVC composition contains less ATO than in a PVC composition not containing the co-precipitated rare earth additive to achieve the same UL94 classification. In certain embodiments, the PVC composition comprises ATO and co-precipitated rare earth additive collectively in an amount of about 3 phr to about 10 phr. In certain embodiments, this PVC composition has a UL94 classification with a sample thickness of about 0.8 mm of V-0. Additionally, this PVC composition also may have a CongoRed at 200°C of about 90 mins to about 200 mins.

This embodiment can include any of the ATO to co-precipitated rare earth additive ratios and any of the co-precipitated rare earth additive compositions as described herein. Additionally, in certain of these embodiments, the PVC composition can comprise about 1 to about 3.5 phr ATO and about 1 to about 4.5 phr co-precipitated rare earth additive.

These particular embodiments can further comprise one or more of the additives as described herein. As such, these particular PVC compositions can further comprise an additive selected from the group consisting of fillers, plasticizers, colorants, stabilizers, lubricants, organic flame retardants, smoke suppressants, and mixtures thereof. These additives are as described above.

In certain embodiments of this particular PVC composition, it contains about 0 phr (i.e., no) chlorinated paraffins.

In another particular embodiment of the PVC composition, it comprises 100 phr PVC resin; about 25 phr to about 50 phr MDH; and about 3 phr to about 10 phr co-precipitated rare earth additive consisting of a rare earth, zinc, and optionally aluminum, magnesium, or a mixture thereof, wherein the co-precipitated rare earth additive contains about 5 to about 95% by weight rare earth measured on a rare earth oxide basis. In certain of these embodiments the rare earth is yttrium. This PVC composition comprises 100 phr of PVC resin and has a UL94 classification with a sample thickness of 0.8 mm of V-0, V-1, or V-2. In certain embodiments, this PVC composition has a UL94 classification with a sample thickness of about 0.8 mm of V-0. Additionally, this PVC composition also may have a CongoRed at 200°C of about 90 mins to about 200 mins.

Through the combination of the co-precipitated rare earth additive and MDH, the PVC composition is able to contain less MDH than in an identical PVC composition not containing the co-precipitated rare earth additive and achieve the same UL94 classification (*i.e.,* a UL94 classification with a sample thickness of about 0.8 mm of V-2 or higher/better, and in some embodiments, a UL94 classification with a sample thickness of about 0.8 mm of V-0). In addition, in certain of these embodiments with MDH and co-precipitated rare earth additive, the PVC composition is able to contain about zero phr (i.e., no) ATO and have a desirable UL94 classification (*i.e.,* a UL94 classification with a sample thickness of about 0.8 mm of V-2 or higher/better, and in some embodiments, a UL94 classification with a sample thickness of about 0.8 mm of V-0). These embodiments with MDH can include any of co-precipitated rare earth additive compositions as described herein.

In specific embodiments with MDH and about zero phr (i.e., no) ATO, the PVC compositions can contain about 25 phr to about 50 phr MDH and about 3 phr to about 6 phr co-precipitated rare earth additive.

In other specific embodiments with MDH and about zero phr (i.e., no) ATO, the PVC compositions can contain about 30 phr to about 50 phr MDH and about 3 phr to about 6 phr co-precipitated rare earth additive.

These particular embodiments can further comprise one or more of the additives as described herein. As such, these particular PVC compositions can further comprise an additive selected from the group consisting of fillers, plasticizers, colorants, stabilizers, lubricants, organic flame retardants, smoke suppressants, and mixtures thereof. These additives are as described above.

Any of the embodiments of the PVC compositions as disclosed herein can be used for a variety of end-use products, well known to those of skill in the art. These types of products include, for example, window frames, doors and door framing, drainage pipe, water service pipe, plumbing pipes, roofing, siding, trim for housing and automotive uses, and flooring. Additional products include plastic bottles, packaging, cling film, and credit, bank or membership cards. Further products include electrical cable insulation or housing, medical devices, blood storage bags, cable and wire insulation, fashion and footwear, inflatable products, and vinyl records. PVC compositions can be included in coated fabrics for protective coating. PVC products further include shower curtains and signage. PVC products additional include sporting goods products such as tents, kayaks, climbing gear and the like.

As described herein, one of skill in the art understands how to select the additional additives and the amount of those additives to include to provide a PVC composition meeting the performance requirements and/or physical characteristics desired for these end-use finished products and their respective specification(s).

### Preparation of Rare Earth Co-Precipitated Additive

The co-precipitated rare earth additives are prepared by intimately mixing aqueous solutions of the individual components of the co-precipitated additive. As described herein, the co-precipitated additive contains a rare earth and one or more of zinc, aluminum, and magnesium. As such, an aqueous solution of the rare earth in water is prepared from a soluble rare earth salt. To this rare earth solution, soluble salts of one or more of zinc, aluminum, and magnesium are added. Soluble salts include chlorides and nitrates. These soluble salts of one or more of zinc, aluminum, and magnesium can be added as the salts or aqueous solutions thereof. The concentration of the aqueous salt solutions utilized can be about 0.0005 mol/L to about 3 mol/L.

The amounts of the rare earth, zinc, aluminum, and magnesium are selected to achieve the desired ratio of components within the co-precipitated additive. These ratios include any of the ratios as described herein. The solution of the rare earth, and one or more of zinc, aluminum, and magnesium is stirred at a temperature of about 0°C to about 90°C for about 5 mins to about 3 hours.

The resulting solution is mixed with a high pH solution (pH about 8 to about 14 and in certain embodiments pH about 9 to about 10) of a base, such as NaOH or NH₄OH, at about 0°C to about 90°C for about 5 mins to about 3 hours. Mixing with base, raises the pH and causes the additive as described herein to precipitate. In certain embodiments, mixing with the base raises the pH to about 8 to about 14 and in certain embodiments, it raises the pH to about 9 to about 10. The resulting co-precipitated rare earth additive is collected by filtration or decanting the liquid of the mixture.

The collected co-precipitated rare earth additive is washed with water to remove any remaining soluble salts. The collected co-precipitated rare earth additive can be washed with deionized water until conductivity of the aqueous is less than 50 mS/cm and in certain embodiments, less than 30 mS/cm. The resulting co-precipitated rare earth additive is optionally dried by heating to a temperature of about 60°C to about 250°C for about 1 hour to about 24 hours where excess water will evaporate. In certain embodiments, the resulting co-precipitated rare earth additive is dried by heating to a temperature of about 80°C to about 200°C for about 6 hours to about 15 hours. As described herein the individual components of the co-precipitated rare earth additive are hydroxides, oxides, or mixtures thereof. The components of the co-precipitated rare earth additive initially are hydroxides and the temperature and time of drying will convert these hydroxides partially or completely to the oxides.

The processes for preparing the co-precipitated rare earth additives as described herein are further exemplified by the Examples that follow.

### Preparation of PVC Compositions

Processes for preparing the PVC compositions are well known in the art and the PVC compositions as disclosed herein can be prepared by any of these known processes. These processes are not limited by any particular steps or methods, and generally can be any that result in a mixture of PVC resin, inorganic flame retardant, and co-precipitated rare earth additive in a suitable PVC composition. The co-precipitated rare earth additive and inorganic flame retardant may be blended together initially, and with any other additives, and then added to a PVC resin. Or the PVC resin, co-precipitated rare earth additive, and inorganic flame retardant, and optional additional additives, may all be blended together at the outset and then processed to provide the PVC composition. The resulting mixture can be either homogenous or heterogeneous. Processes to provide the PVC composition typically further include milling and heating. The process optionally may further include downstream processing steps (e.g., drying steps). These processes to prepare the PVC compositions and then the end-use products can include any processing steps commonly utilized to prepare PVC compositions and end use products as long as the desired physical characteristics of the PVC composition and end use PVC are provided and retained.

The PVC compositions can be prepared by compounding equipment, for example injection molding or extrusion techniques, to provide PVC compositions with excellent dispersibility and thermo-mechanical properties.

### Examples

Thermogravimetric analysis (TGA) data and differential scanning calorimetry (DSC) data for examples disclosed herein were obtained using a TA Instruments^{®} Q600 SDT under simultaneous TGA-DSC operation. Each sample was heated at a rate of 10°C/min from room temperature to 1000°C using air as the active gas at a rate of 90 mL/min and an N₂ balance gas at a flow rate of 10 mL/min. In some instances, TGA and DSC data for each sample was normalized to reflect the weight of the sample at 200°C to account for weight loss from the sample expected to occur during the polymer fabrication process. DSC data was also normalized to reflect the decomposition enthalpy of each sample relative to a starting point of 200°C. Loss on Ignition was measured by heating a weighed sample in a furnace at 1000°C for 1 hour (unless otherwise indicated) and weighing the remaining solid. Surface area, pore radius, and pore volume were measured by the BET/BJH method (ASTM D3663-20). The particle size was measured using a Microtrac S3500. X-Ray Diffraction was performed using a Bruker D2 Phaser X-Ray Diffractometer. The peak width at half height was used to determine the crystallite size. As will be appreciated, crystallite sizes are measured by XRD or TEM and are the size of the individual crystals. The Dxx sizes are the size of the particles that are made-up of the individual crystallites and was measured by laser diffraction.

The limiting oxygen index (LOI) of each compounded material was determined to assess the fire retardance of each sample according to ASTM D 2863. LOI determines the flammability of materials in terms of the minimum concentration of oxygen that is required to allow materials to sustain a candle-like burning behavior. Oxygen concentration is expressed as a percentage by volume of oxygen in a flowing mixture of oxygen and nitrogen. Bar-shaped specimens with size 12.5 mm x 100 mm and 3 mm thickness were used in accordance with ISO4589 standard. The sample was ignited at the top and burning time of the ignited specimen is recorded at different oxygen concentrations in order to determine the minimum oxygen concentration to sustain burning for at least three minutes after removal of ignition flame. A Fire Testing Technology (FTT) model apparatus equipped with an oxygen analyzer was used for this test. Tests were repeated up to five times per formulation until LOI was determined to an acceptable confidence. All samples were tested in the same temperature.

The CongoRed test was performed according to the procedure outlined in International Standard ISO 182-1 at a temperature of 200°C.

Smoke density was determined according to the procedure outlined in ASTM D2843-22.

### Example 1. Synthesis of Yttrium Hydroxide

Yttrium hydroxide was prepared by first preparing a Y(NO₃)₃ solution, containing 250 mg yttrium oxide basis/L. The Y(NO₃)₃ solution was then added to a solution of approximately 10 M NaOH or 5.5 M NH₄OH at a ratio of at least about 6 moles of OH to 1 mole of metal. The precipitate was collected by filtration and washed with DI water until conductivity of the aqueous filtrate was less than 30 mS/cm. Filtration continued to dewater the resulting cake. The precipitated hydroxide was then dried at 80 to 200°C for 6 hours. The material was then jet-milled.

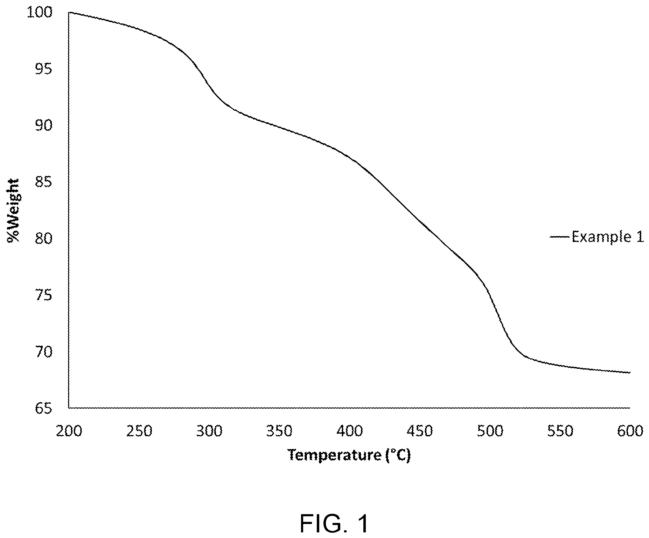

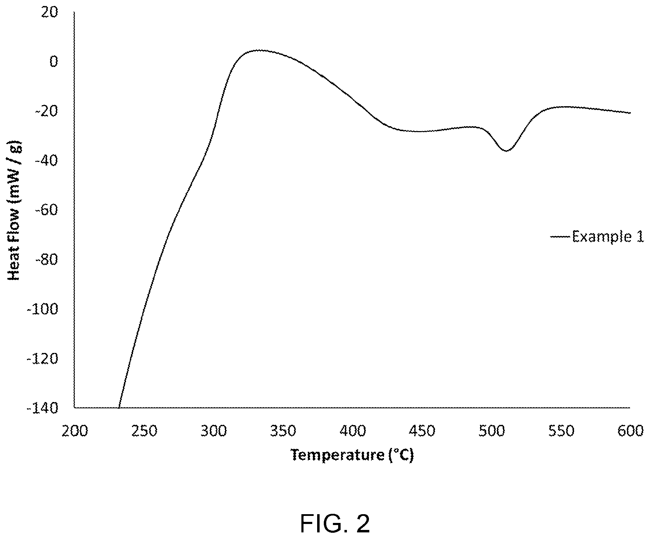

The resulting solid was analyzed via TGA/DSC. Mass loss corresponding to release of water was observed at 250, 390, and 460°C as shown in Fig 1. The DSC reveals endothermic transitions at approximately 450 and 510°C corresponding to enthalpies of approximately 270 and 155 J/g respectively as show in Fig 2. The particle size was measured and found to have a D50 of approximately 2.2 µm, a D90 of approximately 4.2 µm, and a D100 of approximately 7.3 µm. The loss on ignition was found to be 39.37% which indicates the %Y₂O₃ is 60.63%. The solid was also analyzed by x-ray diffraction and found to have a crystallite size of 15.99 nm.

### Example 2A-2E. Additives containing Yttrium, Zinc, and co-precipitated Yttrium and Zinc

The co-precipitated yttrium zinc additives were prepared by first preparing a solution containing dissolved Y(NO₃)₃ and dissolved Zn(NO₃)₂ at a concentrations listed in Table 2 to achieve different ratios of Y oxide to Zn oxide. This solution was then added to a solution of approximately 10 M NaOH or 5.5 M NH₄OH at a ratio of at least about 6 moles of OH to 1 mole of metal (Y and Zn combined). The precipitate was collected by filtration and washed with DI water until conductivity of the aqueous was less than 30 mS/cm. Filtration continued to dewater the resulting cake. The precipitate was then dried at 80 to 200°C for 12 hours. The material was then j et-milled.

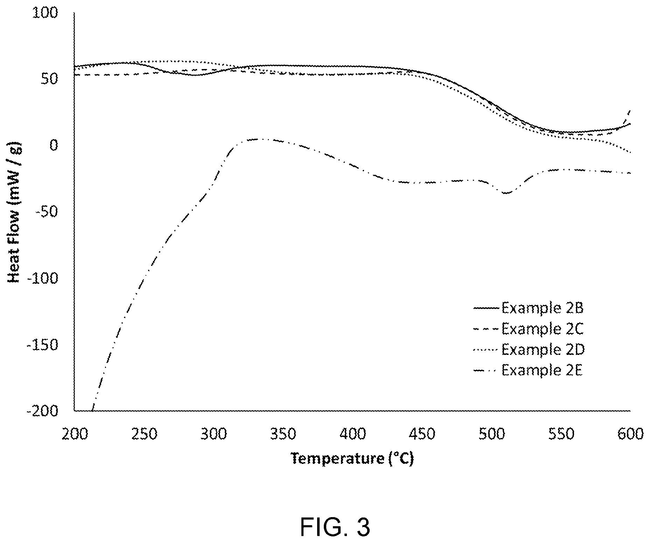

The resulting solid was analyzed via TGA/DSC. A significant mass loss was observed between 200 and 600°C. Significant endothermic peaks were observed in the DSC between 200 and 600°C (Fig 3). The peak enthalpy was calculated from the area under the observed peaks. The enthalpy for the peaks between 200-600°C were summed and are reported in Table 2. The enthalpy for this temperature range for the Y hydroxide of example 1 are listed for comparison. The enthalpy for this temperature range for commercial Zn oxide was not measured but is expected to be lower than about 100 J/g as Zn oxide has no weight loss above about 250°C. The particle size was measured and found to have for 2B a D50 of approximately 9.53 µm and a D90 of approximately 22.67 µm, for 2C a D50 of approximately 7.75 µm and a D90 of approximately 23.61 µm, for 2D a D50 of approximately 13.08 µm and a D90 of approximately 28.81 µm. The loss on ignition was measured to determine the metal oxide content. The loss on ignition for 2B was 10.8%, for 2C was 21.6%, and for 2D was 28.3%. The metal oxide content is 100 minus the loss on ignition.

**Table 2**

| Example | Y oxide concentration (mg/L) | Zn oxide concentration (mg/L) | Y oxide to Zn oxide ratio | Enthalpy 200-600°C (J/g) | |
|---|---|---|---|---|---|
| 2A | - | - | 0:100 | - | Commercial Zn oxide |
| 2B | 100 | 400 | 20:80 | 157 | co-precipitate |
| 2C | 250 | 250 | 50:50 | 307 | co-precipitate |
| 2D | 400 | 100 | 80:20 | 594 | co-precipitate |
| 2E | - | - | 100:0 | 452 | Y(OH)₃ from Ex 1 |

### Example 3A-3F. Additives containing Yttrium, Magnesium, and co-precipitated Yttrium and Magnesium

The co-precipitated yttrium magnesium additives were prepared by first preparing a solution containing dissolved Y(NO₃)₃ and dissolved Mg(NO₃)₂ at a concentrations listed in Table 3 to achieve different ratios of Y oxide to Mg oxide. This solution was then added to a solution of approximately 10 M NaOH or 5.5 M NH₄OH at a ratio of at least about 6 moles of OH to 1 mole of metal (Y and Mg combined). The precipitate was collected by filtration and washed with DI water until conductivity of the aqueous was less than 30 mS/cm. Filtration continued to dewater the resulting cake. The precipitate was then dried at 80 to 200°C for 12 hours. The material was then j et-milled.

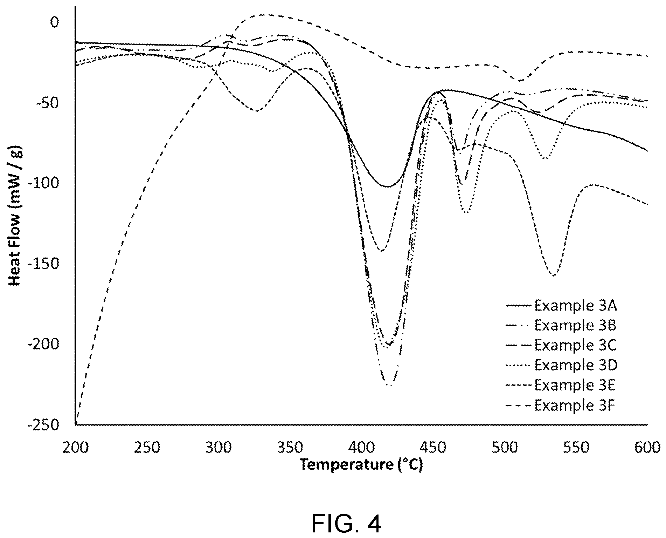

The resulting solid was analyzed via TGA/DSC. A significant mass loss was observed between 200 and 600°C. Significant endothermic peaks were observed in the DSC between 200 and 600°C (Fig 4). The peak enthalpy was calculated from the area under the observed peaks. The enthalpy for the peaks between 200-600°C were summed and are reported in Table 3. The enthalpy of commercial MDH and the Y hydroxide of Example 1 are listed for comparison. The particle size was measured and found to have for 3B a D50 of approximately 1.966 µm, a D90 of approximately 4.032 µm, and a D100 of approximately 9.55 µm and for 3E a D50 of approximately 2.036 µm, a D90 of approximately 3.729 µm, and a D100 of approximately 6.32 µm. The loss on ignition was measured to determine the metal oxide content. The loss on ignition for 3B was 37.6% and for 3E was 37.48%. The metal oxide content is 100 minus the loss on ignition.

**Table 3**

| Example | Y oxide concentration (mg/L) | Mg oxide concentration (mg/L) | Y oxide to Mg oxide ratio | Enthalpy 200-600°C (J/g) | |
|---|---|---|---|---|---|
| 3A | - | - | 0:100 | 669 | Commercial MDH |
| 3B | 100 | 400 | 20:80 | 1230 | co-precipitate |
| 3C | 150 | 350 | 30:70 | 1075 | co-precipitate |
| 3D | 200 | 300 | 40:60 | 878 | co-precipitate |
| 3E | 250 | 250 | 50:50 | 751 | co-precipitate |
| 3F | - | - | 100:0 | 452 | Y(OH)₃ from Ex 1 |

The co-precipitated material has an enthalpy between 200-600°C that is higher than the sum of the individual components. As seen in Ex 3B the enthalpy is 1230 J/g while the individual components would be 20% Y hydroxide at 452 J/g and 80% Mg oxide at 669 J/g or 20%x452 + 80%x669 = 625 J/g.

### Example 4A-4F. Additives containing Lanthanum, Magnesium, and co-precipitated Lanthanum and Magnesium

The co-precipitated lanthanum magnesium additives were prepared by first preparing a solution containing dissolved La(NO₃)₃ and dissolved Mg(NO₃)₂ at a concentrations listed in Table 4 to achieve different ratios of La oxide to Mg oxide. This solution was then added to a solution of approximately 10 M NaOH or 5.5 M NH₄OH at a ratio of at least about 6 moles of OH to 1 mole of metal (La and Mg combined). The precipitate was collected by filtration and washed with DI water until conductivity of the aqueous was less than 30 mS/cm. Filtration continued to dewater the resulting cake. The precipitate was then dried at 80 to 200°C for 12 hours. The material was then jet-milled.

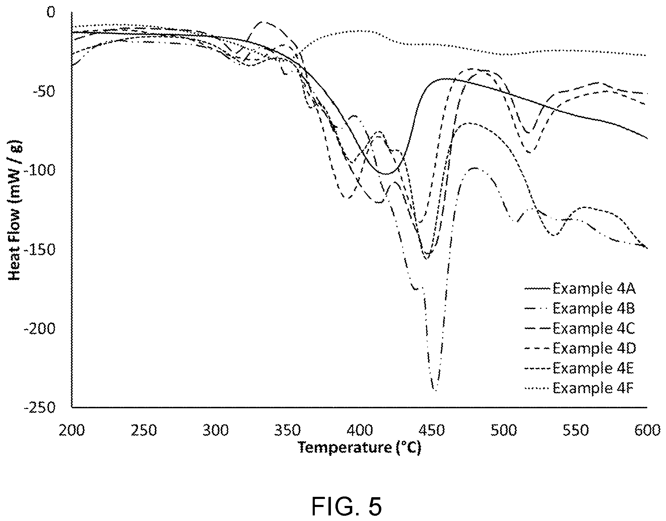

The resulting solid was analyzed via TGA/DSC. A significant mass loss was observed between 200 and 600°C. Significant endothermic peaks were observed in the DSC between 200 and 600°C (Fig 5). The peak enthalpy was calculated from the area under the observed peaks. The enthalpy for the peaks between 200-600°C were summed and are reported in Table 4. The enthalpy of commercial MDH is listed for comparison.

**Table 4**

| Example | La oxide concentration (mg/L) | Mg oxide concentration (mg/L) | La oxide to Mg oxide ratio | Enthalpy 200-600°C (J/g) | |
|---|---|---|---|---|---|
| 4A | - | - | 0:100 | 669 | Commercial MDH |
| 4B | 100 | 400 | 20:80 | 1130 | co-precipitate |
| 4C | 150 | 350 | 30:70 | 1256 | co-precipitate |
| 4D | 200 | 300 | 40:60 | 1007 | co-precipitate |
| 4E | 250 | 250 | 50:50 | 511 | co-precipitate |
| 4F | 500 | - | 100:0 | 508 | |

The co-precipitated material has a enthalpy between 200-600°C that is higher than the sum of the individual components. As seen in Ex 4C the enthalpy is 1256 J/g while the individual components would be 30% La hydroxide at 508 J/g and 70% Mg oxide at 669 J/g or 30%x508 + 70%x669 = 621 J/g.

### Example 5. Additive containing co-precipitated Yttrium Zinc Aluminum

The co-precipitated yttrium zinc aluminum additive was prepared by first preparing a solution containing dissolved Y(NO₃)₃ at a concentration of approximately 14 g yttrium oxide basis/L, dissolved Al(NO₃)₃ at a concentration of approximately 14 g aluminum oxide basis/L, and dissolved Zn(NO₃)₂ at a concentration of approximately 7 g zinc oxide basis/L. The total metal oxide concentration was 35 g/L. This solution was then added to a solution of approximately 1 M NaOH or NH₄OH at a pH of 9.2. Additional NaOH or NH₄OH was added to maintain a pH of 9.2. The precipitate was collected by filtration and washed with DI water until conductivity of the aqueous was less than 30 mS/cm. Filtration continued to dewater the resulting cake. The precipitate was then dried at 80 to 200°C for 6 to 12 hours. The material was then jet-milled.

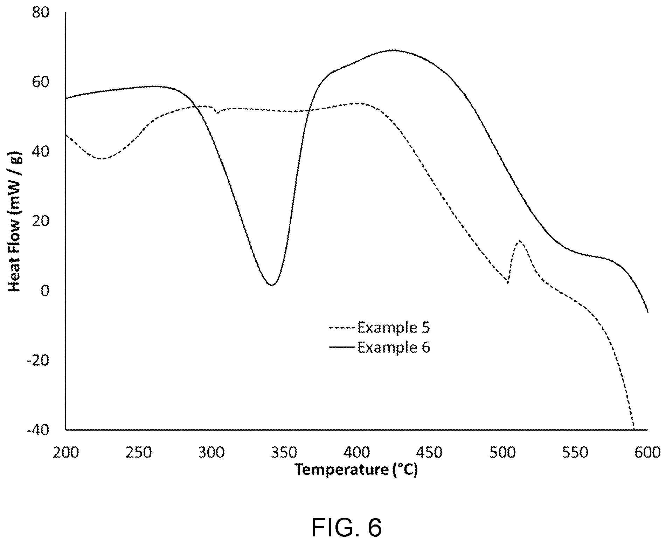

The resulting solid was analyzed via TGA/DSC. A significant mass loss was observed between 200 and 600°C. A significant endothermic peak was observed in the DSC between 185 and 250°C. The peak enthalpy was calculated from the area under the observed peak and found to be peak 227°C area 82.755 J/g, peak 304°C area 19.618 J/g, and peak 504°C area 98.745 J/g, which sums to 201.118 J/g for the 200-600°C temperature range (Fig 6). The particle size was measured and found to have a D50 of approximately 1.71 µm, a D90 of approximately 2.98 µm, and a D100 of approximately 5.23 µm. The loss on ignition was measured to determine the metal oxide content and found to be 34% which indicates a metal oxide content of 66%. The surface area, pore radius, and pore volume were measured to be BJH surface area 64.687 m²/g, BET surface area 41.96 m²/g, pore radius 3.595 nm, and pore volume 0.127 cm³/g.

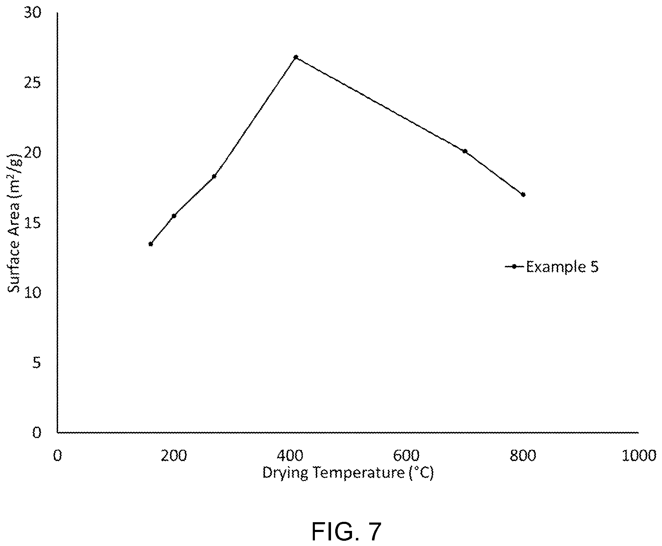

The solid was dried at different temperatures for 15 minutes and then the surface area was measured. The data is listed in Table 5 and depicted in Figure 7. This data shows the surface area increases as the temperature increases and reaches a peak around 400°C which is in the target temperature range of 200-600°C. In a PVC composition this increase in surface area allows for more of the additive's components to interact with the decomposition products of PVC and allow for improved suppression of combustion.

**Table 5**

| Drying Temp (°C) for 15 min | Surface area (m²/g) |
|---|---|
| 160 | 13.5 |
| 200 | 15.5 |
| 270 | 18.3 |
| 410 | 26.8 |
| 700 | 20.1 |
| 800 | 17.0 |

### Example 6. Additive containing co-precipitated Yttrium Zinc Magnesium

The co-precipitated yttrium zinc magnesium additive was prepared by first preparing a solution containing dissolved Y(NO₃)₃ at a concentration of approximately 14 g yttrium oxide basis/L, dissolved Zn(NO₃)₂ at a concentration of approximately 7 g zinc oxide basis/L, and dissolved Mg(NO₃)₂ at a concentration of approximately 14 g magnesium oxide basis/L. The total metal oxide concentration was 35 g/L. This solution was then added to a solution of approximately 1 M NaOH or NH₄OH at a pH of 9.2. Additional NaOH or NH₄OH was added to maintain a pH of 9.2. The precipitate was collected by filtration and washed with DI water until conductivity of the aqueous was less than 30 mS/cm. Filtration continued to dewater the resulting cake. The precipitate was then dried at 80 to 200°C for 6 to 12 hours. The material was then jet-milled.

The resulting solid was analyzed for Loss on Ignition (a measure of contained moisture) for 1 hr at 500°C which resulted in a mass loss of 35.06%. The solid was analyzed via TGA/DSC. A significant mass loss was observed between 260 and 360°C. A significant endothermic peak was observed in the DSC between the same temperature range. The peak enthalpy was calculated from the area under the observed peak and found to be peak 341°C area 524.48 J/g and peak 532°C area 150.086 J/g, which sums to 674.566 J/g for the 200-600°C temperature range (Fig 6). The particle size was measured and found to have a D50 of approximately 1.76 µm, a D90 of approximately 3.986 µm, and a D100 of approximately 8.01 µm. The loss on ignition was measured to determine the metal oxide content and found to be 30.6% so the metal oxide content is 69.4%.

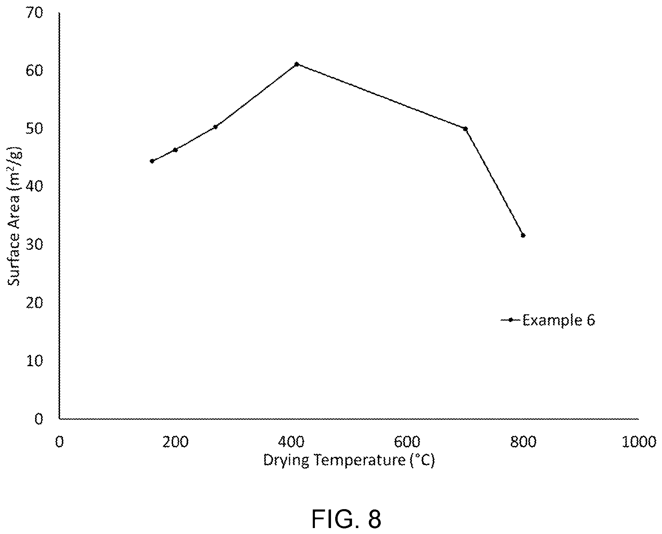

The solid was dried at different temperatures for 15 minutes and then the surface area was measured. The data is listed in Table 6 and depicted in Figure 8. This data shows the surface area increases as the temperature increases and reaches a peak around 400°C which is in the target temperature range of 200-600°C. In a PVC composition this increase in surface area allows for more of the additive's components to interact with the decomposition products of PVC and allow for improved suppression of combustion.

**Table 6**

| Drying Temp (°C) for 15 min | Surface area (m²/g) |
|---|---|
| 160 | 44.3 |
| 200 | 46.3 |
| 270 | 50.3 |
| 410 | 61.1 |
| 700 | 50.0 |
| 800 | 31.6 |

### Example 7A-7J. Polyvinyl Chloride (PVC) Preparation with no chlorinated paraffins

A hopper was loaded with Polyvinyl chloride resin (PVC resin k70), a plasticizer (DIDP Diisodecyl phthalate), fire retardants (Ecopiren 3.5C (MDH) and ATO), a filler (calcium carbonate omyacarb 2T-AV), and materials selected from Example 1, Example 5, Example 6, MDH, ATH, and Zinc oxide in the amounts listed in Table 7-9. The amounts of each component can be adjusted for the desired properties of the resulting PVC. The hopper feeds these materials into a hot mixer heated to 150-165°C. After mixing for 6-10 minutes, the mixed materials were fed into an extruder. After extrusion, the material has cooled to 110-120°C and was cut into pellets. The pellets were cooled to 35-40°C then sieved through a wind-cooled vibrating sieve. Afterward the product was packaged and stored. The resulting PVC compound was tested for density, hardness, Limiting Oxygen Index (LOI), CongoRed test, smoke density, and UL94 rating. The results are presented in Table 7-9.

**Table 7**

| Formulation (phr) | 7A | 7B | 7C | 7D |
|---|---|---|---|---|
| | ATO only | Rare Earth replacing some ATO | Blend of MDH and Zinc oxide | Blend of ATH and Zinc oxide |
| PVC resin k70 | 100 | 100 | 100 | 100 |
| DIDP Diisodecyl phthalate | 50 | 50 | 50 | 50 |
| Ecopiren 3.5C (MDH) | 30 | 30 | 30 | 30 |
| CaCO₃ omyacarb 2T-AV | 50 | 50 | 50 | 50 |
| ATO | 6 | 2 | 2 | 2 |
| Example 1 | | 4 | | |
| MDH | | | 3.2 | |
| ATH | | | | 3.2 |
| Zinc oxide | | | 0.8 | 0.8 |
| Stab Ca/Zn CBS 209/7 | 3 | 3 | 3 | 3 |
| Total | 239 | 239 | 239 | 239 |
| Density | 1.532 | 1.519 | 1.518 | 1.519 |
| Hardness Shore A | 88 | 89 | 88 | 89 |
| Limiting Oxygen Index | 29 | 27 | 32 | 29.5 |
| CongoRed@200°C/Thermal Stability (min) | 60 | 92 | 39 | 45 |
| Smoke density rating (%) ASTM D2843 | 72 | 59.8 | - | - |
| UL94 classification (0.8 mm) | V0 | V0 | V0 | V0 |

Example 7A is a PVC representative of the normal ATO loading. In example 7B, two-thirds of the ATO (as compared to Ex 7A) has been replaced by the material of example 1 which results in a significantly increased CongoRed and a significantly decreased smoke density (as compared to Ex 7A), both of which are favorable and can be attributed to the presence of the example 1 material. In example 7C, two-thirds of the ATO (as compared to Ex 7A) is replaced with a mixture of MDH and zinc oxide in a ratio that is 20:80 zinc oxide to MDH. The results show a decrease in the CongoRed (as compared to Ex 7A) which is unfavorable. In example 7D, two-thirds of the ATO (as compared to Ex 7A) is replaced with a mixture of ATH and zinc oxide in a ratio that is 20:80 zinc oxide to ATH. The results show a decreased CongoRed (as compared to Ex 7A) which is unfavorable.

**Table 8**

| Formulation (phr) | 7E | 7F | 7G | 7H |
|---|---|---|---|---|
| | Co-precipitated YZnAl | Blend of Ex 1, ATH, and Zinc oxide | Co-precipitated YZnMg | Blend of Ex 1, MDH, and Zinc oxide |
| PVC resin k70 | 100 | 100 | 100 | 100 |
| DIDP Diisodecyl phthalate | 50 | 50 | 50 | 50 |
| Ecopiren 3.5C (MDH) | 30 | 30 | 30 | 30 |
| CaCO₃ omyacarb 2T-AV | 50 | 50 | 50 | 50 |
| ATO | 2 | 2 | 2 | 2 |
| Example 1 | | 1.6 | | 1.6 |
| MDH | | | | 1.6 |
| ATH | | 1.6 | | |
| Zinc oxide | | 0.8 | | 0.8 |
| Example 5 | 4 | | | |
| Example 6 | | | 4 | |
| Stab Ca/Zn CBS 209/7 | 3 | 3 | 3 | 3 |
| Total | 239 | 239 | 239 | 239 |
| Density | 1.511 | 1.522 | 1.529 | 1.518 |
| Hardness Shore A | 87 | 89 | 90 | 89 |
| Limiting Oxygen Index | 27 | 29 | 33 | 28.5 |
| CongoRed@200°C/Thermal Stability (min) | 90 | 63 | 51 | 58 |
| Smoke density rating (%) ASTM D2843 | 57.6 | 64 | 61.3 | 63 |
| UL94 classification (0.8 mm) | V0 | V0 | V0 | V0 |

In example 7E, two-thirds of the ATO (as compared to Ex 7A) is replaced with the co-precipitated additive of example 5. In example 7F, two-thirds of the ATO (as compared to Ex 7A) is replaced with a mixture of the material of example 1, ATH, and zinc oxide, where the Y:Zn:Al ratio matches that of example 7E. The results show that the PVC composition of example 7E has a greatly improved CongoRed and significantly lower smoke density than example 7F. This indicates the co-precipitated additive imparts more favorable fire retardant characteristics to the PVC composition despite example 7E and 7F having identical elemental compositions.

In example 7G, two-thirds of the ATO (as compared to Ex 7A) is replaced with the co-precipitated additive of example 6. In example 7H, two-thirds of the ATO (as compared to Ex 7A) is replaced with a mixture of the material of example 1, MDH, and zinc oxide, where the Y:Zn:Mg ratio matches that of example 7G. The results show that the PVC composition of example 7G has an improved LOI and a lower smoke density than example 7H. This indicates the co-precipitated additive imparts more favorable fire retardant characteristics to the PVC composition despite example 7G and 7H having identical elemental compositions.

**Table 9**

| Formulation (phr) | 7I | 7J |
|---|---|---|
| | Co-precipitated YZn | Blend of Ex 1 and Zinc oxide |
| PVC resin k70 | 100 | 100 |
| DIDP Diisodecyl phthalate | 50 | 50 |
| Ecopiren 3.5C (MDH) | 30 | 30 |
| CaCO₃ omyacarb 2T-AV | 50 | 50 |
| ATO | 2 | 2 |
| Example 1 | - | 2 |
| MDH | - | - |
| ATH | - | - |
| Zinc oxide | - | 2 |
| Example 2C | 4 | - |
| Stab Ca/Zn CBS 209/7 | 3 | 3 |
| Total | 239 | 239 |
| Density | 1.523 | 1.520 |
| Hardness Shore A | 88 | 88 |
| Limiting Oxygen Index | 32 | 30 |
| CongoRed@200°C/Thermal Stability (min) | 48 | 43 |
| Smoke density rating (%) ASTM D2843 | - | - |
| UL94 classification (0.8 mm) | V0 | V0 |

In example 7I, two-thirds of the ATO (as compared to Ex 7A) is replaced with the co-precipitated additive of example 2C. In example 7J, two-thirds of the ATO (as compared to Ex 7A) is replaced with a mixture of the material of example 1 and zinc oxide, where the Y:Zn ratio matches that of example 7I. The results show that the PVC composition of example 7I has an improved LOI and an improved CongoRed than example 7J. This indicates the co-precipitated additive imparts more favorable fire retardant characteristics to the PVC composition despite example 7I and 7J having identical elemental compositions.

### Example 8. Polyvinyl Chloride (PVC) Preparation with chlorinated paraffin

A hopper was loaded with Polyvinyl chloride resin (PVC resin k70), a plasticizer (DIDP Diisodecyl phthalate), a chlorinated paraffin (Essebiochlor 45), fire retardants (ATO), a filler (calcium carbonate omyacarb 2T-AV), zinc borate, and materials selected from Example 1, Example 2, Example 5, Example 6, MDH, ATH, and Zinc oxide in the amounts listed in Table 10-12. The amounts of each component can be adjusted for the desired properties of the resulting PVC. The hopper feeds these materials into a hot mixer heated to 150-165°C. After mixing for 6-10 minutes, the mixed materials were fed into an extruder. After extrusion, the material has cooled to 110-120°C and was cut into pellets. The pellets were cooled to 35-40°C then sieved through a wind-cooled vibrating sieve. Afterward the product was packaged and stored. The resulting PVC compound was tested for density, hardness, Limiting Oxygen Index (LOI), CongoRed test, and UL94 rating. The results are presented in Table 10-12.

**Table 10**

| Formulation (phr) | 8A | 8B |
|---|---|---|
| | ATO only | Rare Earth replacing some ATO |
| PVC resin k70 | 100 | 100 |
| DIDP Diisodecyl phthalate | 35 | 35 |
| Essebiochlor 45 | 15 | 15 |
| CaCO₃ omyacarb 2T-AV | 80 | 80 |
| ATO | 6 | 3 |
| Example 1 | - | 3 |
| Example 2B | - | - |
| Example 2C | - | - |
| Example 2D | - | - |
| Zinc oxide | - | - |
| Zinc Borate | 2 | 2 |
| Stab Ca/Zn CBS 209/7 | 3 | 3 |
| Total | 241 | 241 |
| Density | 1.574 | 1.561 |
| Hardness Shore A | 89 | 89 |
| Limiting Oxygen Index | 32 | 27 |
| CongoRed@200°C/Thermal Stability (min) | 30 | 47 |
| UL94 classification (0.8 mm) | V0 | V0 |

Example 8A is a PVC representative of the normal ATO loading. In example 8B, half of the ATO (as compared to Ex 8A) is replaced with the material of example 1. Example 8B results show an increase in the CongoRed over example 8A.

**Table 11**

| Formulation (phr) | 8C | 8D | 8E | 8F | 8G | 8H |
|---|---|---|---|---|---|---|
| | Co-ppt YZn (20:80) | Blend of Ex 1 and Zinc oxide (20:80) | Co-ppt YZn (50:50) | Blend of Ex 1 and Zinc oxide (50:50) | Co-ppt YZn (80:20) | Blend of Ex 1 and Zinc oxide (80:20) |
| PVC resin k70 | 100 | 100 | 100 | 100 | 100 | 100 |
| DIDP Diisodecyl phthalate | 35 | 35 | 35 | 35 | 35 | 35 |
| Essebiochlor 45 | 15 | 15 | 15 | 15 | 15 | 15 |
| CaCO₃ omyacarb 2T-AV | 80 | 80 | 80 | 80 | 80 | 80 |
| ATO | 3 | 3 | 3 | 3 | 3 | 3 |
| Example 1 | - | 0.6 | - | 1.5 | - | 2.4 |
| Example 2B | 3 | - | - | - | - | - |
| Example 2C | - | - | 3 | - | - | - |
| Example 2D | - | - | - | - | 3 | - |
| Zinc oxide | - | 2.4 | - | 1.5 | - | 0.6 |
| Zinc Borate | 2 | 2 | 2 | 2 | 2 | 2 |
| Stab Ca/Zn CBS 209/7 | 3 | 3 | 3 | 3 | 3 | 3 |
| Total | 241 | 241 | 241 | 241 | 241 | 241 |
| Density | 1.564 | 1.577 | 1.563 | 1.577 | 1.555 | 1.576 |
| Hardness Shore A | 89 | 91 | 90 | 91 | 90 | 93 |
| Limiting Oxygen Index | 28 | 33 | 28 | 33 | 27 | 32.5 |
| CongoRed@200°C/Thermal Stability (min) | 21 | 12 | 25 | 12 | 32 | 17 |
| UL94 classification (0.8 mm) | V0 | V0 | V0 | V0 | V0 | V0 |

In example 8C, half of the ATO (as compared to Ex 8A) is replaced with the co-precipitated additive of example 2B. In example 8D, half of the ATO (as compared to Ex 8A) is replaced with a mixture of the material of example 1 and zinc oxide, where the Y:Zn ratio matches that of example 8C. The results show that the PVC composition of example 8C has a significantly improved CongoRed compared to example 8D. This indicates the co-precipitated additive imparts more favorable fire retardant characteristics to the PVC composition despite example 8C and 8D having identical elemental compositions.

In example 8E, half of the ATO (as compared to Ex 8A) is replaced with the co-precipitated additive of example 2C. In example 8F, half of the ATO (as compared to Ex 8A) is replaced with a mixture of the material of example 1 and zinc oxide, where the Y:Zn ratio matches that of example 8E. The results show that the PVC composition of example 8E has a significantly improved CongoRed compared to example 8F. This indicates the co-precipitated additive imparts more favorable fire retardant characteristics to the PVC composition despite example 8E and 8F having identical elemental compositions.

In example 8G, half of the ATO (as compared to Ex 8A) is replaced with the co-precipitated additive of example 2D. In example 8H, half of the ATO (as compared to Ex 8A) is replaced with a mixture of the material of example 1 and zinc oxide, where the Y:Zn ratio matches that of example 8G. The results show that the PVC composition of example 8G has a significantly improved CongoRed compared to example 8H. This indicates the co-precipitated additive imparts more favorable fire retardant characteristics to the PVC composition despite example 8G and 8H having identical elemental compositions.

**Table 12**

| Formulation (phr) | 8I | 8J | 8K | 8L |
|---|---|---|---|---|
| | Co-precipitated YZnAl | Blend of Ex 1, ATH, and Zinc oxide | Co-precipitated YZnMg | Blend of Ex 1, MDH, and Zinc oxide |
| PVC resin k70 | 100 | 100 | 100 | 100 |
| DIDP Diisodecyl phthalate | 35 | 35 | 35 | 35 |
| Essebiochlor 45 | 15 | 15 | 15 | 15 |
| CaCO₃ omyacarb 2T-AV | 80 | 80 | 80 | 80 |
| ATO | 3 | 3 | 3 | 3 |
| MDH | | | | 1.2 |
| ATH | | 1.2 | | |
| Example 1 | | 1.2 | | 1.2 |
| Example 5 | 3 | | | |
| Example 6 | | | 3 | |
| Zinc oxide | | 0.6 | | 0.6 |
| Zinc Borate | 2 | 2 | 2 | 2 |
| Stab Ca/Zn CBS 209/7 | 3 | 3 | 3 | 3 |
| Total | 241 | 241 | 241 | 241 |
| Density | 1.565 | 1.573 | 1.556 | 1.575 |
| Hardness Shore A | 88 | 90 | 88 | 90 |
| Limiting Oxygen Index | 28 | 31 | 29 | 30 |
| CongoRed@200°C/Thermal Stability (min) | 50 | 17 | 39 | 17 |
| UL94 classification (0.8 mm) | V0 | V0 | V0 | V0 |

In example 8I, half of the ATO (as compared to Ex 8A) is replaced with the co-precipitated additive of example 5. In example 8J, half of the ATO (as compared to Ex 8A) is replaced with a mixture of the material of example 1, zinc oxide and ATH, where the Y:Zn:Al ratio matches that of example 8I. The results show that the PVC composition of example 8I has a significantly improved CongoRed compared to example 8J. This indicates the co-precipitated additive imparts more favorable fire retardant characteristics to the PVC composition despite example 8I and 8J having identical elemental compositions.

In example 8K, half of the ATO (as compared to Ex 8A) is replaced with the co-precipitated additive of example 6. In example 8L, half of the ATO (as compared to Ex 8A) is replaced with a mixture of the material of example 1, zinc oxide and MDH, where the Y:Zn:Mg ratio matches that of example 8K. The results show that the PVC composition of example 8K has a significantly improved CongoRed compared to example 8L. This indicates the co-precipitated additive imparts more favorable fire retardant characteristics to the PVC composition despite example 8K and 8L having identical elemental compositions.

## Claims

1. A polyvinyl chloride (PVC) composition comprising:
PVC resin;
an inorganic flame retardant selected from the group consisting of antimony trioxide (ATO), magnesium dihydroxide (MDH), aluminum trihydrate (ATH), and mixtures thereof; and
a co-precipitated rare earth additive consisting of a rare earth and one or more of zinc, aluminum, and magnesium, wherein the co-precipitated rare earth additive contains about 5 to about 95% by weight rare earth measured on a rare earth oxide basis; and
wherein the composition comprises 100 phr of PVC resin and has a UL94 classification with a sample thickness of 0.8 mm of V-2 or higher.

2. The PVC composition of claim 1 comprising 1 phr to 10 phr co-precipitated rare earth additive.

3. The PVC composition of claims 1 or 2, wherein: (i) the rare earth is yttrium, lanthanum, cerium, neodymium, praseodymium, or mixtures thereof, or (ii) the precipitated rare earth additive contains (a) yttrium, zinc, and aluminum; (b) yttrium, zinc, and magnesium; (c) yttrium and zinc; or (d) yttrium, zinc, magnesium, and aluminum.

4. The PVC composition of claim 3, wherein the rare earth is yttrium.

5. The PVC composition of any one of claims 1-4, wherein the inorganic flame retardant is ATO and the PVC composition contains less ATO than in a PVC composition not containing the co-precipitated rare earth additive to achieve the same UL94 classification.

6. The PVC composition of claim 5, wherein the co-precipitated rare earth additive is yttrium and zinc and the yttrium:zinc ratio is about 90:10 to about 10:90, and the ratio of ATO:rare earth is 90:10 to 10:90, and the ratio of ATO:rare earth is 1:3 to 3:1, optionally wherein: (i) the ratio of ATO:co-precipitated rare earth additive is 1:1 to 1:2, or (ii) the composition comprises ATO and co-precipitated rare earth additive collectively in an amount of 3 phr to 10 phr, for example, wherein the composition comprises 1 to 3.5 phr ATO and 1 to 4.5 phr co-precipitated rare earth additive.

7. The PVC composition of claim 5, wherein the co-precipitated rare earth additive is yttrium, zinc, magnesium and the co-precipitated rare earth additive contains 5 % to 90 % by weight yttrium; 5% to 50% by weight zinc; and 5 % to 90 % by weight magnesium as measured on an oxide basis, and the ratio of ATO:co-precipitated rare earth additive is 1:3 to 3:1.

8. The PVC composition of claim 7, wherein: (i) the ratio of ATO:co-precipitated rare earth additive is 1:1 to 1:2, (ii) the co-precipitated rare earth additive is yttrium, zinc, magnesium in a ratio of 40:20:40, (iii) the composition comprises ATO and co-precipitated rare earth additive collectively in an amount of 3 phr to 10 phr, or (iv) the composition comprises 1 to 3.5 phr ATO and 1 to 4.5 phr co-precipitated rare earth additive.

9. The PVC composition of claim 5, wherein the co-precipitated rare earth additive is yttrium, zinc, aluminum and the co-precipitated rare earth additive contains 5 % to 90 % by weight yttrium; 5 % to 50 % by weigh zinc; and 5 % to 90 % by weigh aluminum as measured on an oxide basis, and the ratio of ATO:co-precipitated rare earth additive is 1:3 to 3:1.

10. The PVC composition of claim 9, wherein: (i) the ratio of ATO:co-precipitated rare earth additive is 1:1 to 1:2, (ii) the co-precipitated rare earth additive is yttrium, zinc, aluminum in a ratio of 40:20:40, (iii) the composition comprises ATO and co-precipitated rare earth additive collectively in an amount of 3 phr to 10 phr, or (iv) the composition comprises 1 to 3.5 phr ATO and 1 to 4.5 phr co-precipitated rare earth additive.

11. The PVC composition of any one of claims 1-10, wherein the PVC composition has a UL94 classification with a sample thickness of 0.8 mm of V-0 or V-1.

12. The PVC composition of any one of claims 1-11, further comprising an additive selected from the group consisting of fillers, plasticizers, colorants, stabilizers, lubricants, organic flame retardants, smoke suppressants, and mixtures thereof.

13. The PVC composition of any one of claims 1-12, wherein: (i) the PVC composition exhibits improved thermal stability as measured by CongoRed at 200°C in comparison to an identical PVC composition containing the components of the co-precipitated additive but added to the PVC composition as a blend of these components rather than a co-precipitant, and/or (ii) the PVC composition exhibits improved LOI in comparison to an identical PVC composition containing the components of the co-precipitated additive but added to the PVC composition as a blend of these components rather than a co-precipitant, and/or (iii) the PVC composition exhibits improved smoke density as measured by ASTM D2843-22 in comparison to an identical PVC composition containing the components of the co-precipitated additive but added to the PVC composition as a blend of these components rather than a co-precipitant.

14. A PVC composition comprising:
PVC resin; ATO; and a co-precipitated rare earth additive consisting of a rare earth, zinc, and optionally aluminum, magnesium, or mixture thereof, wherein the co-precipitated rare earth additive contains 5 to 95% by weight rare earth measured on a rare earth oxide basis; and
wherein the composition comprises 100 phr of PVC resin and has a UL94 classification with a sample thickness of 0.8 mm of V-0, V-1, or V-2, and the PVC composition contains less ATO than in a PVC composition not containing the co-precipitated rare earth additive to achieve the same UL94 classification.

15. The PVC composition of claim 14, further comprising an additive selected from the group consisting of fillers, plasticizers, colorants, stabilizers, lubricants, organic flame retardants, smoke suppressants, and mixtures thereof.

16. The PVC composition of claim 15 or 16, wherein: (i) the PVC composition exhibits improved thermal stability as measured by CongoRed at 200°C in comparison to an identical PVC composition containing the components of the co-precipitated additive but added to the PVC composition as a blend of these components rather than a co-precipitant, and/or (ii) wherein the PVC composition exhibits improved LOI in comparison to an identical PVC composition containing the components of the co-precipitated additive but added to the PVC composition as a blend of these components rather than a co-precipitant, and/or (iii) the PVC composition exhibits improved smoke density as measured by ASTM D2843-22 in comparison to an identical PVC composition containing the components of the co-precipitated additive but added to the PVC composition as a blend of these components rather than a co-precipitant.

17. The PVC composition of claim 1 or 14, comprising 0 phr chlorinated paraffins.

## Patentansprüche

1. Polyvinylchlorid(PVC)-Zusammensetzung, umfassend:
PVC-Harz;
ein anorganisches Flammschutzmittel, ausgewählt aus der Gruppe bestehend aus Antimontrioxid (ATO), Magnesiumdihydroxid (MDH), Aluminiumtrihydrat (ATH) und Mischungen davon; und
ein gemeinsam ausgefälltes Seltenerdadditiv, bestehend aus einem Seltenerdmetall und einem oder mehreren von Zink, Aluminium und Magnesium, wobei das gemeinsam ausgefällte Seltenerdadditiv etwa 5 bis etwa 95 Gew.-% Seltenerdmetall, gemessen auf Seltenerdoxidbasis, enthält; und
wobei die Zusammensetzung 100 phr PVC-Harz umfasst und eine UL94-Klassifizierung mit einer Probendicke von 0,8 mm der Klasse V-2 oder höher aufweist.

2. PVC-Zusammensetzung nach Anspruch 1, umfassend 1 phr bis 10 phr gemeinsam ausgefälltes Seltenerdadditiv.

3. PVC-Zusammensetzung nach Anspruch 1 oder 2, wobei: (i) es sich bei dem Seltenerdmetall um Yttrium, Lanthan, Cer, Neodym, Praseodym oder Mischungen davon handelt oder (ii) das ausgefällte Seltenerdadditiv (a) Yttrium, Zink und Aluminium; (b) Yttrium, Zink und Magnesium; (c) Yttrium und Zink; oder (d) Yttrium, Zink, Magnesium und Aluminium enthält.

4. PVC-Zusammensetzung nach Anspruch 3, wobei es sich bei dem Seltenerdmetall um Yttrium handelt.

5. PVC-Zusammensetzung nach einem der Ansprüche 1 bis 4, wobei das anorganische Flammschutzmittel ATO ist und die PVC-Zusammensetzung weniger ATO enthält als in einer PVC-Zusammensetzung, die das gemeinsam ausgefällte Seltenerdadditiv nicht enthält, um die gleiche UL94-Klassifizierung zu erreichen.

6. PVC-Zusammensetzung nach Anspruch 5, wobei das gemeinsam ausgefällte Seltenerdadditiv Yttrium und Zink ist und das Yttrium:Zink-Verhältnis etwa 90:10 bis etwa 10:90 beträgt und das Verhältnis von ATO zu Seltenerdmetall 90:10 bis 10:90 beträgt und das Verhältnis von ATO zu Seltenerdmetall 1:3 bis 3:1 beträgt, optional wobei: (i) das Verhältnis von ATO zu gemeinsam ausgefälltem Seltenerdadditiv 1:1 bis 1:2 beträgt oder (ii) die Zusammensetzung ATO und gemeinsam ausgefälltes Seltenerdadditiv zusammen in einer Menge von 3 phr bis 10 phr umfasst, zum Beispiel wobei die Zusammensetzung 1 bis 3,5 phr ATO und 1 bis 4,5 phr gemeinsam ausgefälltes Seltenerdadditiv umfasst.

7. PVC-Zusammensetzung nach Anspruch 5, wobei das gemeinsam ausgefällte Seltenerdadditiv Yttrium, Zink, Magnesium ist und das gemeinsam ausgefällte Seltenerdadditiv 5 Gew.-% bis 90 Gew.-% Yttrium; 5 Gew.-% bis 50 Gew.-% Zink; und 5 Gew.-% bis 90 Gew.-% Magnesium, gemessen auf Oxidbasis, enthält und das Verhältnis von ATO zu gemeinsam ausgefälltem Seltenerdadditiv 1:3 bis 3:1 beträgt.

8. PVC-Zusammensetzung nach Anspruch 7, wobei: (i) das Verhältnis von ATO zu gemeinsam ausgefälltem Seltenerdadditiv 1:1 bis 1:2 beträgt, (ii) das gemeinsam ausgefällte Seltenerdadditiv Yttrium, Zink, Magnesium in einem Verhältnis von 40:20:40 ist, (iii) die Zusammensetzung ATO und gemeinsam ausgefälltes Seltenerdadditiv zusammen in einer Menge von 3 phr bis 10 phr umfasst oder (iv) die Zusammensetzung 1 bis 3,5 phr ATO und 1 bis 4,5 phr gemeinsam ausgefälltes Seltenerdadditiv umfasst.

9. PVC-Zusammensetzung nach Anspruch 5, wobei das gemeinsam ausgefällte Seltenerdadditiv Yttrium, Zink, Aluminium ist und das gemeinsam ausgefällte Seltenerdadditiv 5 Gew.-% bis 90 Gew.-% Yttrium; 5 Gew.-% bis 50 Gew.-% Zink; und 5 Gew.-% bis 90 Gew.-% Aluminium, gemessen auf Oxidbasis, enthält und das Verhältnis von ATO zu gemeinsam ausgefälltem Seltenerdadditiv 1:3 bis 3:1 beträgt.

10. PVC-Zusammensetzung nach Anspruch 9, wobei: (i) das Verhältnis von ATO zu gemeinsam ausgefälltem Seltenerdadditiv 1:1 bis 1:2 beträgt, (ii) das gemeinsam ausgefällte Seltenerdadditiv Yttrium, Zink, Aluminium in einem Verhältnis von 40:20:40 ist, (iii) die Zusammensetzung ATO und gemeinsam ausgefälltes Seltenerdadditiv zusammen in einer Menge von 3 phr bis 10 phr umfasst oder (iv) die Zusammensetzung 1 bis 3,5 phr ATO und 1 bis 4,5 phr gemeinsam ausgefälltes Seltenerdadditiv umfasst.

11. PVC-Zusammensetzung nach einem der Ansprüche 1 bis 10, wobei die PVC-Zusammensetzung eine UL94-Klassifizierung mit einer Probendicke von 0,8 mm der Klasse V-0 oder V-1 aufweist.

12. PVC-Zusammensetzung nach einem der Ansprüche 1 bis 11, ferner umfassend ein Additiv, ausgewählt aus der Gruppe bestehend aus Füllstoffen, Weichmachern, Farbmitteln, Stabilisatoren, Gleitmitteln, organischen Flammschutzmitteln, Rauchunterdrückungsmitteln und Mischungen davon.

13. PVC-Zusammensetzung nach einem der Ansprüche 1 bis 12, wobei: (i) die PVC-Zusammensetzung eine verbesserte thermische Stabilität, gemessen mittels CongoRed bei 200 °C, im Vergleich zu einer identischen PVC-Zusammensetzung, die die Komponenten des gemeinsam ausgefällten Additivs enthält, die jedoch der PVC-Zusammensetzung als Blend dieser Komponenten anstatt als gemeinsames Fällungsprodukt zugesetzt sind, zeigt und/oder (ii) die PVC-Zusammensetzung einen verbesserten LOI im Vergleich zu einer identischen PVC-Zusammensetzung, die die Komponenten des gemeinsam ausgefällten Additivs enthält, die jedoch der PVC-Zusammensetzung als Blend dieser Komponenten anstatt als gemeinsames Fällungsprodukt zugesetzt sind, zeigt und/oder (iii) die PVC-Zusammensetzung eine verbesserte Rauchdichte, gemessen mittels ASTM D2843-22, im Vergleich zu einer identischen PVC-Zusammensetzung, die die Komponenten des gemeinsam ausgefällten Additivs enthält, die jedoch der PVC-Zusammensetzung als Blend dieser Komponenten anstatt als gemeinsames Fällungsprodukt zugesetzt sind, zeigt.

14. PVC-Zusammensetzung, umfassend:
PVC-Harz; ATO; und ein gemeinsam ausgefälltes Seltenerdadditiv, bestehend aus einem Seltenerdmetall, Zink und optional Aluminium, Magnesium oder einer Mischung davon, wobei das gemeinsam ausgefällte Seltenerdadditiv 5 bis 95 Gew.-% Seltenerdmetall, gemessen auf Seltenerdoxidbasis, enthält; und
wobei die Zusammensetzung 100 phr PVC-Harz umfasst und eine UL94-Klassifizierung mit einer Probendicke von 0,8 mm der Klasse V-0, V-1 oder V-2 aufweist und die PVC-Zusammensetzung weniger ATO enthält als in einer PVC-Zusammensetzung, die das gemeinsam ausgefällte Seltenerdadditiv nicht enthält, um die gleiche UL94-Klassifizierung zu erreichen.

15. PVC-Zusammensetzung nach Anspruch 14, ferner umfassend ein Additiv, ausgewählt aus der Gruppe bestehend aus Füllstoffen, Weichmachern, Farbmitteln, Stabilisatoren, Gleitmitteln, organischen Flammschutzmitteln, Rauchunterdrückungsmitteln und Mischungen davon.

16. PVC-Zusammensetzung nach Anspruch 15 oder 16, wobei: (i) die PVC-Zusammensetzung eine verbesserte thermische Stabilität, gemessen mittels CongoRed bei 200 °C, im Vergleich zu einer identischen PVC-Zusammensetzung, die die Komponenten des gemeinsam ausgefällten Additivs enthält, die jedoch der PVC-Zusammensetzung als Blend dieser Komponenten anstatt als gemeinsames Fällungsprodukt zugesetzt sind, zeigt und/oder (ii) wobei die PVC-Zusammensetzung einen verbesserten LOI im Vergleich zu einer identischen PVC-Zusammensetzung, die die Komponenten des gemeinsam ausgefällten Additivs enthält, die jedoch der PVC-Zusammensetzung als Blend dieser Komponenten anstatt als gemeinsames Fällungsprodukt zugesetzt sind, zeigt und/oder (iii) die PVC-Zusammensetzung eine verbesserte Rauchdichte, gemessen mittels ASTM D2843-22, im Vergleich zu einer identischen PVC-Zusammensetzung, die die Komponenten des gemeinsam ausgefällten Additivs enthält, die jedoch der PVC-Zusammensetzung als Blend dieser Komponenten anstatt als gemeinsames Fällungsprodukt zugesetzt sind, zeigt.

17. PVC-Zusammensetzung nach Anspruch 1 oder 14, umfassend 0 phr chlorierte Paraffine.

## Revendications

1. Composition de polychlorure de vinyle (PVC) comprenant :
une résine PVC ;
un retardateur de flamme inorganique choisi dans le groupe constitué par du trioxyde d'antimoine (ATO), du dihydroxyde de magnésium (MDH), du trihydrate d'aluminium (ATH) et des mélanges de ceux-ci ; et
un additif de terres rares coprécipité constitué d'une terre rare et d'un ou plusieurs éléments parmi du zinc, de l'aluminium et du magnésium, dans laquelle l'additif de terres rares coprécipité contient d'environ 5 à environ 95 % en poids de terres rares, mesurées sur une base d'oxydes de terres rares ; et
dans laquelle la composition comprend 100 phr de résine PVC et présente une classification UL94 avec une épaisseur d'échantillon de 0,8 mm supérieure ou égale à V-2.

2. Composition de PVC selon la revendication 1 comprenant de 1 phr à 10 phr d'additif de terres rares coprécipité.

3. Composition de PVC selon les revendications 1 ou 2, dans laquelle : (i) la terre rare est l'yttrium, le lanthane, le cérium, le néodyme, le praséodyme ou des mélanges de ceux-ci, ou (ii) l'additif de terres rares précipité contient (a) de l'yttrium, du zinc et de l'aluminium ; (b) de l'yttrium, du zinc et du magnésium ; (c) de l'yttrium et du zinc ; ou (d) de l'yttrium, du zinc, du magnésium et de l'aluminium.

4. Composition de PVC selon la revendication 3, dans laquelle la terre rare est de l'yttrium.

5. Composition de PVC selon l'une quelconque des revendications 1 à 4, dans laquelle le retardateur de flamme inorganique est de l'ATO et la composition de PVC contient moins d'ATO que dans une composition de PVC ne contenant pas l'additif de terres rares coprécipité pour atteindre la même classification UL94.

6. Composition de PVC selon la revendication 5, dans laquelle l'additif de terres rares coprécipité est composé d'yttrium et de zinc, et le rapport yttrium : zinc est situé dans la plage allant d'environ 90:10 à environ 10:90, et le rapport ATO : terres rares est situé dans la plage allant de 90:10 à 10:90, et le rapport ATO : terres rares est situé dans la plage allant de 1:3 à 3:1, éventuellement dans laquelle : (i) le rapport ATO : additif de terres rares coprécipité est situé dans la plage allant de 1:1 à 1:2, ou (ii) la composition comprend de l'ATO et un additif de terres rares coprécipité collectivement en une quantité de 3 phr à 10 phr, par exemple, dans laquelle la composition comprend de 1 à 3,5 phr d'ATO et de 1 à 4,5 phr d'additif de terres rares coprécipité.

7. Composition de PVC selon la revendication 5, dans laquelle l'additif de terres rares coprécipité est de l'yttrium, du zinc et du magnésium, et l'additif de terres rares coprécipité contient de 5 % à 90 % en poids d'yttrium ; de 5 % à 50 % en poids de zinc ; et de 5 % à 90 % en poids de magnésium, telles que mesurées sur une base d'oxydes, et le rapport ATO : additif de terres rares coprécipité est situé dans la plage allant de 1:3 à 3:1.

8. Composition de PVC selon la revendication 7, dans laquelle : (i) le rapport ATO : additif de terres rares coprécipité est situé dans la plage allant de 1:1 à 1:2, (ii) l'additif de terres rares coprécipité est de l'yttrium, du zinc, du magnésium selon un rapport de 40:20:40, (iii) la composition comprend de l'ATO et un additif de terres rares coprécipité collectivement en une quantité de 3 phr à 10 phr, ou (iv) la composition comprend de 1 à 3,5 phr d'ATO et de 1 à 4,5 phr d'additif de terres rares coprécipité.

9. Composition de PVC selon la revendication 5, dans laquelle l'additif de terres rares coprécipité est de l'yttrium, du zinc et de l'aluminium, et l'additif de terres rares coprécipité contient de 5 % à 90 % en poids d'yttrium ; de 5 % à 50 % en poids de zinc ; et de 5 % à 90 % en poids d'aluminium, telles que mesurées sur une base d'oxydes, et le rapport ATO : additif de terres rares coprécipité est situé dans la plage allant de 1:3 à 3:1.

10. Composition de PVC selon la revendication 9, dans laquelle : (i) le rapport ATO : additif de terres rares coprécipité est situé dans la plage allant de 1:1 à 1:2, (ii) l'additif de terres rares coprécipité est de l'yttrium, du zinc, de l'aluminium selon un rapport de 40:20:40, (iii) la composition comprend de l'ATO et un additif de terres rares coprécipité collectivement en une quantité de 3 phr à 10 phr, ou (iv) la composition comprend de 1 à 3,5 phr d'ATO et de 1 à 4,5 phr d'additif de terres rares coprécipité.

11. Composition de PVC selon l'une quelconque des revendications 1 à 10, dans laquelle la composition de PVC présente une classification UL94 avec une épaisseur d'échantillon de 0,8 mm de V-0 ou V-1.

12. Composition de PVC selon l'une quelconque des revendications 1 à 11, comprenant en outre un additif choisi dans le groupe constitué par des charges, des plastifiants, des colorants, des stabilisateurs, des lubrifiants, des retardateurs de flamme organiques, des additifs anti-fumée et des mélanges de ceux-ci.

13. Composition de PVC selon l'une quelconque des revendications 1 à 12, dans laquelle : (i) la composition de PVC présente une stabilité thermique améliorée, telle que mesurée par le test du rouge Congo à 200 °C, par rapport à une composition de PVC identique contenant les composants de l'additif coprécipité, mais ajouté à la composition de PVC sous forme de mélange de ces composants plutôt que comme un coprécipitant, et/ou (ii) la composition de PVC présente un LOI amélioré par rapport à une composition de PVC identique contenant les composants de l'additif coprécipité, mais ajouté à la composition de PVC sous forme de mélange de ces composants plutôt que comme un coprécipitant, et/ou (iii) la composition de PVC présente une densité de fumée améliorée, telle que mesurée par ASTM D2843-22, par rapport à une composition de PVC identique contenant les composants de l'additif coprécipité, mais ajouté à la composition de PVC sous forme de mélange de ces composants plutôt que comme un coprécipitant.

14. Composition de PVC comprenant :
une résine PVC ; de l'ATO ; et un additif de terres rares coprécipité constitué d'une terre rare, de zinc et, éventuellement, d'aluminium, de magnésium ou d'un mélange de ceux-ci, dans laquelle l'additif de terres rares coprécipité contient de 5 à 95 % en poids de terres rares, mesurées sur une base d'oxydes de terres rares ; et
dans laquelle la composition comprend 100 phr de résine PVC et présente une classification UL94 avec une épaisseur d'échantillon de 0,8 mm de V-0, V-1 ou V-2, et la composition de PVC contient moins d'ATO que dans une composition de PVC ne contenant pas l'additif de terres rares coprécipité pour atteindre la même classification UL94.

15. Composition de PVC selon la revendication 14, comprenant en outre un additif choisi dans le groupe constitué par des charges, des plastifiants, des colorants, des stabilisateurs, des lubrifiants, des retardateurs de flamme organiques, des additifs anti-fumée et des mélanges de ceux-ci.

16. Composition de PVC selon la revendication 15 ou 16, dans laquelle : (i) la composition de PVC présente une stabilité thermique améliorée, telle que mesurée par le test du rouge Congo à 200 °C, par rapport à une composition de PVC identique contenant les composants de l'additif coprécipité, mais ajouté à la composition de PVC sous forme de mélange de ces composants plutôt que comme un coprécipitant, et/ou (ii) dans laquelle la composition de PVC présente un LOI amélioré par rapport à une composition de PVC identique contenant les composants de l'additif coprécipité, mais ajouté à la composition de PVC sous forme de mélange de ces composants plutôt que comme un coprécipitant, et/ou (iii) la composition de PVC présente une densité de fumée améliorée, telle que mesurée par ASTM D2843-22, par rapport à une composition de PVC identique contenant les composants de l'additif coprécipité, mais ajouté à la composition de PVC sous forme de mélange de ces composants plutôt que comme un coprécipitant.

17. Composition de PVC selon la revendication 1 ou 14, comprenant 0 phr de paraffines chlorées.
